# EUROPEAN PATENT APPLICATION

(11) **EP 4 361 723 A1**
(43) Date of publication of application: **01.05.2024**
(21) Application number: 21947179.4
(22) Date of filing: 25.06.2021
(51) Int. Cl.: G03B 15/00, G03B 17/02, H04N 5/225

(54) **IMAGING DEVICE AND LIGHT RECEIVING DEVICE**

(71) Applicant: NIKON CORPORATION, Minato-ku Tokyo 108-6290 (JP)
(72) Inventor: MIYAZAKI, Yosuke, Tokyo 108-6290 (JP); ITO, Tomoki, Tokyo 108-6290 (JP)
(74) Representative: Arnold & Siedsma
(86) International application number: PCT/JP2021/024100
(87) International publication number: WO 2022/269895

(57) **Abstract**

An imaging device includes an image formation optical system, a light division member configured to amplitude-divide light which has passed through at least a part of the image formation optical system, a first imaging unit configured to capture a first image formed by one light flux divided by the light division member, a second imaging unit configured to capture a portion in a second image formed by the other light flux divided by the light division member, and a driving unit configured to move the second imaging unit in a direction crossing a light path of the other light flux.

## Description

### [Technical Field]

The present invention relates to an imaging device, and a light receiving device.

### [Background Art]

A camera is attached to a rotary pan head device that can be panned and tilted to direct the camera toward an object (Patent Document 1).

### [Citation List]

### [Patent Document]

[Patent Document 1]
US Patent No. 4,855,838

### [Summary of Invention]

According to a first aspect, an imaging device includes an image formation optical system, a light division member configured to amplitude-divide light which has passed through at least a part of the image formation optical system, a first imaging unit configured to capture a first image formed by one light flux divided off by the light division member, a second imaging unit configured to capture a part in a second image formed by the other light flux divided off by the light division member, and a driving unit configured to move the second imaging unit in a direction crossing a light path of the other light flux.

According to a second aspect, a light receiving device includes an image formation optical system, a light division member configured to amplitude-divide light which has passed through at least a part of the image formation optical system, an imaging unit configured to capture an image formed by one light flux divided by the light division member, a light receiving unit having a light incidence part configured to allow incidence of some of the other light flux divided by the light division member, and a driving unit configured to move the light incidence part in a direction crossing a light path of the other light flux.

### [Brief Description of Drawings]

FIG. 1 is a view showing a schematic configuration of an imaging device of a first embodiment.
FIG. 2 is a view for describing schematic configurations of a first imaging element and a second imaging element.
FIG. 3 is a view showing a positional relation between a first image and a first imaging range of the first imaging element, and a positional relation between a second image and a second imaging range of the second imaging element.
FIG. 4 is a view showing an example of a usage state of the imaging device of the first embodiment.
FIG. 5 is a view showing an example of an image captured by the imaging device.
FIG. 6 is a view showing another example of the image captured by the imaging device.
FIG. 7 is a view showing a schematic configuration of an imaging device of a second embodiment.
FIG. 8 is a view showing a part of an image formation optical system and an image re-formation optical system of the imaging device of the second embodiment.

### [Description of Embodiments]

### (Imaging device of first embodiment)

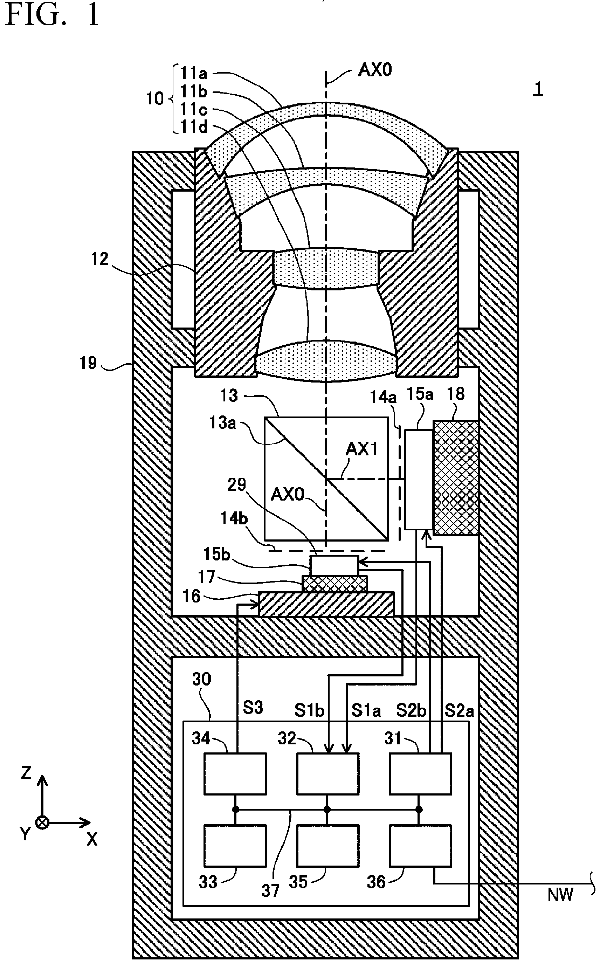

FIG. 1 is a view showing a schematic configuration of an imaging device 1 of a first embodiment. In an X direction, a Y direction, and a Z direction shown by arrows in FIG. 1, directions indicated by the arrows are + directions. The X direction, the Y direction, and the Z direction are directions perpendicular to each other. In addition, hereinafter, a position in the X direction is referred to as an X position, a position in the Y direction is referred to as a Y position, and a position in the Z direction is referred to as a Z position. Further, the X direction, the Y direction, and the Z direction in each drawing referenced herein below are the same directions as the X direction, the Y direction, and the Z direction shown in FIG. 1, respectively.

The imaging device 1 of the first embodiment includes an image formation optical system 10, a light division member 13, a first imaging element 15a, a second imaging element 15b, a driving part 16 configured to move the second imaging element 15b, a controller 30, and the like.

The image formation optical system 10 includes a plurality of lenses 11a to 11d disposed along an optical axis AX0 as an example. The plurality of lenses 11a to 11d are held by a holding frame 12, and the holding frame 12 is held by a housing 19 of the imaging device 1.

At least some of the lenses 11a to 11d constituting the image formation optical system 10 may be held movably in the ±Z direction with respect to the holding frame 12 for focus adjustment. In FIG. 1, the lenses 11a to 11d are all shown as one lens, but they can also be lens groups consisting of plurality of lenses, or even ones that include optical members such as mirrors, diffraction optical elements, and the like. In addition, the number of lens groups constituting the image formation optical system 10 is not limited to the four shown in the drawings (the lenses 11a to 11d), and may be any other arbitrary number. Further, the image formation optical system 10 can be said to be an aspect of a condensing optical system because it condenses incident light. Accordingly, the image formation optical system 10 may be referred to as the condensing optical system.

As shown in FIG. 1, the light division member 13 is disposed at a side where light from an object side of the image formation optical system 10 (an outer side of the imaging device 1) passes through and is emitted from the image formation optical system 10 (a light emission side of the image formation optical system 10). The light division member 13 amplitude-divides the light passing through the image formation optical system 10. The light division member 13 is, for example, a cube type beam splitter, and has a dividing and reflecting surface 13a configured to amplitude-divide light from the image formation optical system 10, i.e., reflect some of the light and transmit it. A quantity of light reflected by the dividing and reflecting surface 13a and a quantity of light passing therethrough may be equal to or different from each other. The light division member 13 may be a plate type in which a dividing and reflecting surface is formed on a transparent planar plate.

Further, division of the light by the light division member 13 is not limited to the above-mentioned amplitude division.

For example, the light division member 13 may divide polarized components of the incident light. In this case, the light division member 13 may be a conventional optical member configured to divide polarized components of light, for example, a polarization beam splitter or the like. Further, the light division member 13 may divide wavelength components of the incident light. In this case, the light division member 13 may be a conventional optical member configured to divide wavelength components of light, for example, a dichroic mirror or the like.

Further, the light division member 13 may divide the incident light by reflecting some of the incident light flux (in other words, the other part of the incident light flux is transmitted). In this case, the light division member 13 may be a conventional reflecting member such as a mirror or the like disposed on a part of a light path of the incident light flux. Further, when the light division member 13 reflects some of the incident light flux, the light division member 13 also divides a field of vision of the image formation optical system 10. In other words, the light division member 13 may be a member configured to divide the incident light flux.

Further, in order to divide the light passing through the image formation optical system 10, the light division member 13 may not be disposed on a side where light from an object side (an outer side of the imaging device 1) of the image formation optical system 10 passes through and is emitted from the image formation optical system 10 (a light emission side of the image formation optical system 10). For example, the light division member 13 may divide light passing through a part of the image formation optical system 10. For this reason, the light division member 13 may be disposed between arbitrary lenses (lens group) among the lenses (lens group) 11a to 11d that constitute the image formation optical system 10.

Further, an optical member separate from the image formation optical system 10 may be formed on the light path of the light flux reflected by the light division member 13 such that an image (a first image 14a, which will be described below) is formed in the vicinity of the imaging surface of the first imaging element 15a by the light flux reflected by the light division member 13. In addition, an optical member separate from the image formation optical system 10 may be provided on the light path of the light flux passing through the light division member 13 such that an image (a second image 14b, which will be described below) is formed in the vicinity of the imaging surface of the second imaging element 15b by the light flux passing through the light division member 13.

That is, the light division member 13 may divide light passing through at least a part of the image formation optical system 10. Further, the light division member 13 also divides light passing through at least one optical member of the image formation optical system 10. Further, the light division member 13 also divides light passing through at least one lens of the image formation optical system 10. Further, the light division member 13 also divides light passing through at least one lens group of the image formation optical system 10.

In the light amplitude-divided by the light division member 13, a light flux passing through the dividing and reflecting surface 13a advances substantially along the optical axis AX0 of the image formation optical system 10 and is emitted from the light division member 13. The light flux reflected by the dividing and reflecting surface 13a advances substantially along an optical axis AX1, which is an axis obtained by geometrically reflecting the optical axis AX0 of the image formation optical system 10 using the dividing and reflecting surface 13a, and is emitted from the light division member 13. Since the optical axis AX1 is an axis optically equivalent to the optical axis AX0, hereinafter, the optical axis AX1 is also referred to as an optical axis of the image formation optical system 10.

Hereinafter, among the light amplitude-divided by the light division member 13, one of the light fluxes forms the first image 14a after emission from the light division member 13. The other light flux forms the second image 14b after emission from the light division member 13. Here, among the light amplitude-divided by the light division member 13, one light flux is also a light flux used in formation of the first image 14a. In addition, among the light amplitude-divided by the light division member 13, the other light flux is also a light flux used in formation of the second image 14b.

Further, since the light passing through and incident on least a part of the image formation optical system 10 is divided (for example, amplitude-divided) into the light fluxes (one light flux and the other light flux) by the light division member 13, and the first image 14a and the second image 14b are formed by the divided light fluxes, it can be also said that the light division member 13 contributes to image formation of the first image 14a and the second image 14b. Accordingly, the light division member 13 may be a part of the image formation optical system 10.

An image of an object in an arbitrary predetermined angular range of the image formation optical system 10 on the side of the object is formed as the first image 14a. Then, similarly, an image of an object in a predetermined angular range of the image formation optical system 10 on the side of the object is formed as the second image 14b. Further, the arbitrary predetermined angular range of the image formation optical system 10 on the side of the object may be referred to as a field of vision of the image formation optical system 10.

The first imaging element 15a is disposed in the vicinity of the first image 14a such that the imaging surface thereof substantially coincides with the first image 14a. The first imaging element 15a may be referred to as a first imaging unit. Further, the first imaging unit may include at least a part of the controller 30, which will be described below (for example, an image generating unit 32). Further, the optical axis AX1 may be referred to as an optical axis of the image formation optical system 10 on the side of the first imaging unit because it is the optical axis directed toward the first imaging unit. Further, the optical axis AX0 and the optical axis AX1 may be collectively referred to as the optical axis of the image formation optical system 10 on the side of the first imaging unit. Further, the first imaging unit may include not only the first imaging element 15a but also another element such as a fixing part 18 or the like, which will be described below.

The second imaging element 15b is disposed in the vicinity of the second image 14b such that the imaging surface thereof substantially coincides with the second image 14b in a direction of the optical axis AX0. The second imaging element 15b may be referred to as the second imaging unit. The first imaging unit may include at least a part of the controller 30, which will be described below (for example, the image generating unit 32). Further, the optical axis AX0 is discriminated from the optical axis AX1 and may be referred to as an optical axis of the image formation optical system 10 on the side of the second imaging unit because it is an optical axis directed toward the second imaging unit. Further, as a part of the optical axis AX0, an optical axis from the light division member 13 to the second imaging unit may be referred to as an optical axis of the image formation optical system 10 on the side of the second imaging unit. Further, the second imaging unit may be referred to as a light receiving unit because it receives the other light flux from the light division member 13.

Further, light from the object side of the image formation optical system 10 (for example, light from a target or the like) enters the light division member 13 via the image formation optical system 10, and is divided (for example, amplitude-divided) by the light division member 13 to form an images of each of the light fluxes. Here, each formed image is also referred to as an image within an arbitrary range on the object side of the image formation optical system 10. The arbitrary range is also a range that can be captured by the imaging device 1 (or, the imaging device 1A, which will be described below). In this case, the first imaging unit (the first imaging element 15a) also captures an image of the arbitrary range (in other words, the first image 14a). Meanwhile, the second imaging unit (the second imaging element 15b) captures a part in the image of the arbitrary range (in other words, the second image 14b).

As described above, the imaging device 1 (or, the imaging device 1A, which will be described below) also includes the image formation optical system 10 that can capture an arbitrary range, the light division member 13 configured to divide light passing through at least a part of the image formation optical system 10, the first imaging unit configured to capture the first image 14a in the arbitrary range formed by one light flux divided by the light division member 13, the second imaging unit configured to capture a part in the second image 14b in the arbitrary range formed by the other light flux divided by the light division member 13, and the driving part 16 (or, a first driving part 16a, which will be described below) configured to move the second imaging unit. Further, the second imaging unit may include not only the second imaging element 15b but also another element. For example, the second imaging unit may include, in addition to the second imaging element 15b, at least one of a holding part 17, which will be described below, and the driving part 16.

The first imaging element 15a is held by the fixing part 18 attached to the housing 19.

The second imaging element 15b is held by the holding part 17, and the second imaging element 15b and the holding part 17 are held by the driving part 16 movably, for example, in the X direction and the Y direction. As the second imaging element 15b is moved in the X direction and the Y direction as an example, the imaging range of the second image 14b captured by the second imaging element 15b is changed. Accordingly, an imaging field of vision on an object side (target side) captured by the second imaging element 15b is also changed. Further, the second imaging element 15b and the holding part 17 may be held by the driving part 16 movably in the X direction or the Y direction. Further, the second imaging element 15b and the holding part 17 may be held by the driving part 16 movably in an arbitrary one direction in an XY plane defined by the X direction and the Y direction.

In other words, the driving part 16 also moves the second imaging element 15b in two directions (for example, the X direction and the Y direction) crossing the optical axis AX0 parallel to the Z direction of the image formation optical system 10 on the side of the second imaging element 15b. As another expression, the driving part 16 also moves the second imaging element 15b in a direction crossing the light path of the other light flux.

As another expression, the driving part 16 also moves the second imaging element 15b in a direction crossing a direction in which the other light flux advancing substantially along the optical axis AX0 enters the second imaging element 15b. In addition, in other words, the driving part 16 moves the second imaging element 15b in an in-plane direction of an image surface of the second image 14b. Further, the driving part 16 may be a conventional driving mechanism such as a linear motor, a stepping motor, or the like.

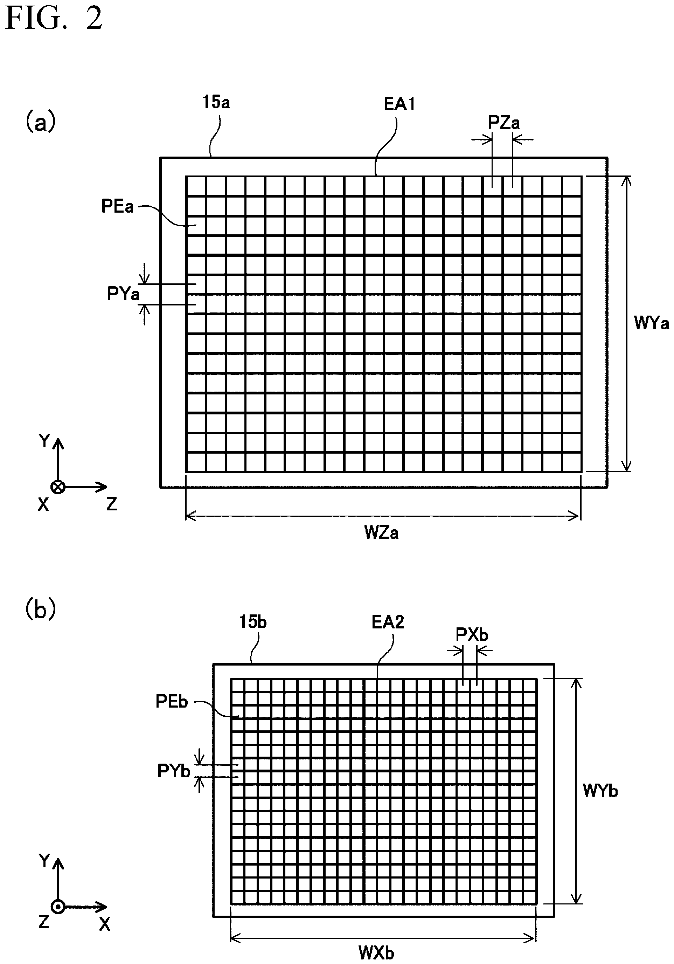

Hereinafter, schematic configurations of the first imaging element 15a and the second imaging element 15b will be described with reference to FIG. 2.

FIG. 2(a) is a view showing the first imaging element 15a form an imaging surface side (-X side), and FIG. 2(b) is a view showing the second imaging element 15b from an imaging surface side (+Z side).

A plurality of first pixels PEa are two-dimensionally disposed in a first effective region EA1 of the first imaging element 15a at an array pitch PZa in the Z direction and an array pitch PYa in the Y direction. The array pitch PZa in the Z direction and the array pitch PYa in the Y direction may be the same or may be different from each other. Further, a width of the first pixels PEa in the Z direction and a width of the first pixels PEa in the Y direction may be the same or may be different from each other. For example, 1000 or more first pixels PEa may be arranged in each of the Z direction and the Y direction. In dimensions of the first effective region EA1, a width in the Z direction is expressed as WZa, and a width in the Y direction is a width WYa.

Similarly, a plurality of second pixels PEb are two-dimensionally disposed in a second effective region EA2 of the second imaging element 15b at an array pitch PXb in the X direction and an array pitch PYb in the Y direction. The array pitch PXb in the X direction and the array pitch PYb in the Y direction may be the same or may be different from each other. Further, a width of the second pixels PEb in the Z direction and a width of the second pixels PEb in the Y direction may be the same or may be different from each other. For example, 1000 or more second pixels PEb may be arranged in each of the X direction and the Y direction. In dimensions of the second effective region EA2, a width in the X direction is expressed as WXb, and a width in the Y direction is expressed as WYb.

The array pitch PXb and the array pitch PYb of the second pixels PEb of the second imaging element 15b are smaller than the array pitch PZa and the array pitch PYa of the first pixels PEa of the first imaging element 15a. Accordingly, the second imaging element 15b is an imaging element having the number (in other words, density) of the second pixels PEb per a unit area of the second effective region EA2 greater than the number (in other words, density) in the first effective region EA1 of the first imaging element 15a and a resolution higher than that of the first imaging element 15a. Further, in other words, a width of the second pixels PEb in the Z direction and a width of the second pixels PEb in the Y direction of the second imaging element 15b are smaller than a width of the first pixels PEa in the Z direction and a width of the first pixels PEa in the Y direction of the first imaging element 15a.

The width WXb of the second effective region EA2 of the second imaging element 15b in the X direction is smaller than the width WZa of the first effective region EA1 of the first imaging element 15a in the Z direction. In addition, the width WYb of the second effective region EA2 of the second imaging element 15b in the Y direction is smaller than the width WYa of the first effective region EA1 of the first imaging element 15a in the X direction. Accordingly, an area of the second effective region EA2 is smaller than an area of the first effective region EA1.

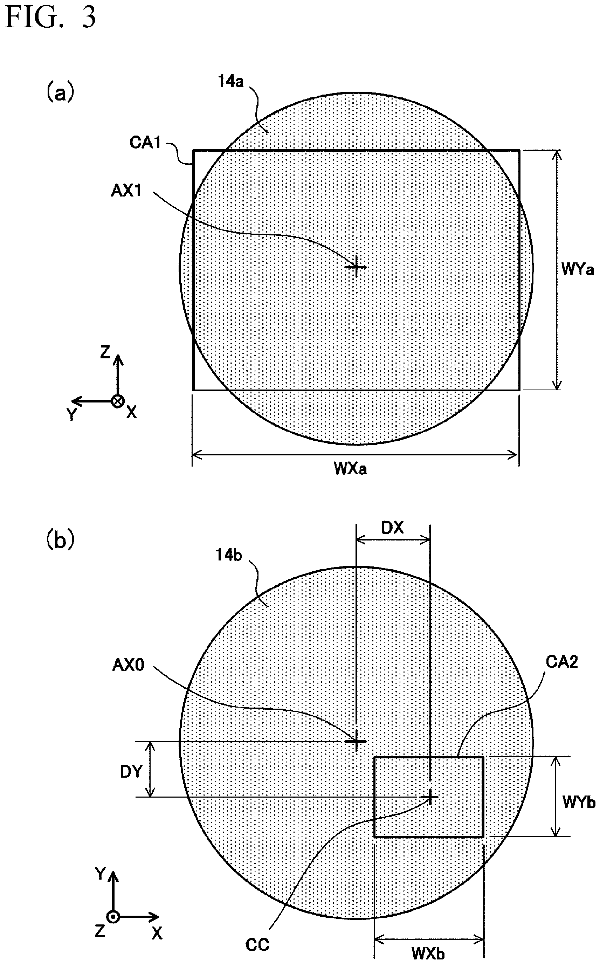

FIG. 3(a) is a view showing a positional relation between a first imaging range CA1 of the first imaging element 15a and the first image 14a, and FIG. 3(b) is a view showing a positional relation between a second imaging range CA2 by the second imaging element 15b and the second image 14b. The first imaging range CA1 corresponds to the first effective region EA1 of the first imaging element 15a shown FIG. 2(a). The second imaging range CA2 corresponds to the second effective region EA2 of the second imaging element 15b shown in FIG. 2(b).

Further, the imaging range may be referred to as an imaging region. That is, the first imaging range CA1 may be referred to as a first imaging region, and the second imaging range CA2 may be referred to as a second imaging region.

FIG. 3(b) shows a state in which a center CC of the second imaging range CA2 of the second imaging element 15b has been moved by DX in the X direction and DY in the Y direction with respect to the optical axis AX0 by the driving part 16 described above in detail. Further, FIGS. 3(a) and 3(b) of the embodiment, while a ratio between an area of the first effective region EA1 and an area of the second effective region EA2 is substantially equal to a ratio between an area of the first imaging range CA1 and an area of the second imaging range CA2, for convenience of the description, the ratios between the areas are changed.

According to the configurations of the image formation optical system 10 and the light division member 13, the first image 14a and the second image 14b are substantially the same image, and dimensions thereof are equal to each other. However, the second effective region EA2 of the second imaging element 15b disposed at a position of the second image 14b is smaller than the first effective region EA1 of the first imaging element 15a disposed at a position of the first image 14a.

Accordingly, a proportion of the second imaging range CA2 captured by the second imaging element 15b in the second image 14b is smaller than a proportion of the first imaging range CA1 captured by the first imaging element 15a of the first image 14a.

The second imaging element 15b captures a portion in the second image 14b. Then, as described above, since the second imaging element 15b has a higher resolution than that of the first imaging element 15a, the second imaging element 15b also captures a portion in the second image 14b with a higher resolution than that of the first imaging element 15a. Since the second imaging element 15b is moved by the driving part 16 in a direction in the XY plane, many parts in the second image 14b can be captured with a high resolution. In addition, since the second imaging element 15b is moved by the driving part 16 in the direction in the XY plane, a desired portion in the second image 14b can be captured with a high resolution.

Further, when the second imaging unit (the second imaging element 15b) captures a portion in the second image 14b, some of the other light flux from the light division member 13 also enters the second imaging unit. In this case, the second imaging unit also has a light incidence part 29 in to which some of the other light flux enters. Further, the light incidence part 29 is also at least a part of the second imaging unit. For example, the light incidence part 29 may be a light incidence surface of the plurality of first pixels PEa arranged in the first effective region EA1.

Further, the second imaging unit may also be referred to as a light receiving unit. The light receiving unit also receives some of the other light flux from the light division member 13. In this case, the light receiving unit also has the light incidence part 29 into which some of the other light flux enter. Further, the light incidence part 29 is also at least a part of the light receiving unit.

Further, when the second imaging unit captures a portion in the second image 14b, some of the other light flux from the light division member 13 also enters the second imaging unit. The second imaging range CA2 may also be referred to as a light receiving region because some of the other light flux from the light division member 13 enters the second imaging range CA2. Further, in this case, the light receiving region is also a part of a region in which the second image 14b is formed (in other words, a region through which the other light flux from the light division member 13 passes). Further, the second imaging unit may also be referred to as a light receiving unit. The light receiving unit also receives light passing through the light receiving region that is a part of a region through which the other light flux divided by the light division member 13 passes.

Meanwhile, the first imaging element 15a can capture many portions in the first image 14a at the same time. That is, the first imaging element 15a can capture a wide range in the first image 14a at a time. A diameter of the first image 14a shown in a circular shape as an example in FIG. 3(a) is, for example, 170° or more when it is converted into an angle of view on an object side opposite to the light division member 13 of the image formation optical system 10 (a side opposite to the side of the first image 14a according to the image formation optical system 10). Accordingly, a maximum angle of view of the image formation optical system 10 on the object side may be 170° or more. Further, the maximum angle of view on the object side of the image formation optical system 10 may be 170°, for example, may be 60°. Further, a diameter of the second image 14b shown in a circular shape as an example in FIG. 3(b) and a value converted to the angle of view on the object side are the same as each other.

Further, in FIG. 3(a), while a part of the first image 14a is included in the first imaging range CA1, the entire the first image 14a may be included in the first imaging range CA1, and on the contrary, the entire first imaging range CA1 may be included in the first image 14a. In addition, a center of the first imaging range CA1 may coincide with or may not coincide with the optical axis AX1. Further, in the first imaging element 15a, the plurality of first pixels PEa may not be disposed, and there may be one first pixel PEa. In addition, a single photodiode may be used instead of the first imaging element 15a. Similarly, in the second imaging element 15b, the plurality of second pixels PEb may not be arranged, and the second pixels PEb may be one. In addition, a single photodiode may be used instead of the second imaging element 15b.

The controller 30 of the imaging device 1 will be described with reference to FIG. 1 again.

The controller 30 controls various operations of the imaging device 1. The controller 30 includes an imaging controller 31, the image generating unit 32, an analysis unit 33, an imaging range controller 34, a storage unit 35, and an interface part 36. The imaging controller 31, the image generating unit 32, the analysis unit 33, the imaging range controller 34, the storage unit 35, and the interface part 36 perform communication of signals with each other via a wiring 37 such as a bus or the like.

The imaging controller 31 sends a control signal S2a to the first imaging element 15a and controls the first imaging element 15a. Specifically, the imaging controller 31 performs control with respect to the first imaging element 15a, for example, starting and ending of output of a low resolution moving image (through-image), capturing of a still image, setting of an exposure time (light receiving time), setting of a gain of photoelectric conversion, and the like. The imaging controller 31 sends a control signal S2b to the second imaging element 15b and controls the second imaging element 15b like the first imaging element 15a.

The image generating unit 32 receives an imaging signal S1a from the first imaging element 15a and generates image data of the first image 14a captured by the first imaging element 15a. The image generating unit 32 receives an imaging signal S1b from the second imaging element 15b and generates image data of the second image 14b captured by the second imaging element 15b.

The image generating unit 32 may have a function of correcting contortion of the first image 14a or the second image 14b due to distortion of the image formation optical system 10 upon generation of image data. In addition, the image generating unit 32 may have a function of correcting degradation of the first image 14a or the second image 14b due to an aberration other than distortion of the image formation optical system 10.

The analysis unit 33 analyzes information of a target that may be included in the image data on the basis of the image data of a portion of the first image 14a or the second image 14b generated by the image generating unit 32. When image data of at least a portion of the target is included in the image data of the first image 14a or the image data of the portion of the second image 14b, the analysis unit 33 can detect the image data of at least the portion of the target through analysis. Further, in other words, the analysis unit 33 can detect at least a portion of the image of the target included in the image corresponding to the image data of the portion of the first image 14a or the second image 14b generated by the image generating unit 32.

Further, the analysis unit 33 may also be rephrased as a detection unit because it detects at least a portion of the target (at least a portion of the image of the target). Further, in other words, the analysis unit 33 can detect the image data of at least the portion of the target by analyzing the image data of the first image 14a or the image data of the portion of the second image 14b generated by the image generating unit 32. Further, in other words, the analysis unit 33 also recognizes at least the portion of the target (at least the portion of the image of the target). Accordingly, the analysis unit 33 may be rephrased as a recognition unit. Further, analysis by the analysis unit 33 will be described below.

The imaging range controller 34 sends a driving signal S3 to the driving part 16 on the basis of the results obtained by analyzing the information of the target (in other words, results obtained by detecting at least the portion of the image of the target) on the basis of the image data of the portion of the first image 14a or the second image 14b using the analysis unit 33, drives a driving member such as a linear motor or the like included in the driving part 16, and moves the holding part 17 and the second imaging element 15b in the direction in the XY plane as an example. That is, as shown in FIG. 3(b), the imaging range controller 34 moves a position of the center CC of the second imaging range CA2 of the second imaging element 15b to a predetermined position with respect to the optical axis AX0. Further, the imaging range controller 34 also moves a position of the center CC of the second imaging range CA2 of the second imaging element 15b to a predetermined position in the second image 14b.

Accordingly, the second imaging range CA2 captured by the second imaging element 15b in the second image 14b is changed. Accordingly, an imaging field of vision on the object side (target side) captured by the second imaging element 15b is changed.

Further, the imaging range controller 34 may also send the driving signal S3 to the driving part 16 and move the second imaging element 15b on the basis of the signal input from the operation unit (not shown) via the interface part 36 regardless of the information of the target detected through analysis by the analysis unit 33.

The storage unit 35 includes a storage member such as a memory device, a magnetic disk, or the like, and stores the image data generated by the image generating unit 32 on the basis of the image captured by at least one of the first imaging element 15a and the second imaging element 15b according to necessity.

The interface part 36 outputs the image data generated by the image generating unit 32 or the image data stored in the storage unit 35 on the basis of the image captured by at least one of the first imaging element 15a and the second imaging element 15b to an external instrument via a network line NW. In addition, the interface part 36 may receive an instruction from the external instrument with respect to the imaging device 1. The interface part 36 may include a wireless transmission/reception mechanism, and output of the image data and input of the instruction may be performed in a wireless manner.

Further, the imaging controller 31, the image generating unit 32, the analysis unit 33, the imaging range controller 34, the storage unit 35, and the interface part 36 may be hardware, which are independent from each other, i.e., mechanically separated from each other. Alternatively, some of the imaging controller 31, the image generating unit 32, the analysis unit 33, the imaging range controller 34, the storage unit 35, and the interface part 36 may be integrally configured as one or a plurality of hardware.

In addition, at least one of the imaging controller 31, the image generating unit 32, the analysis unit 33, the imaging range controller 34, the storage unit 35, and the interface part 36 may be constituted by hardware and software that controls the hardware.

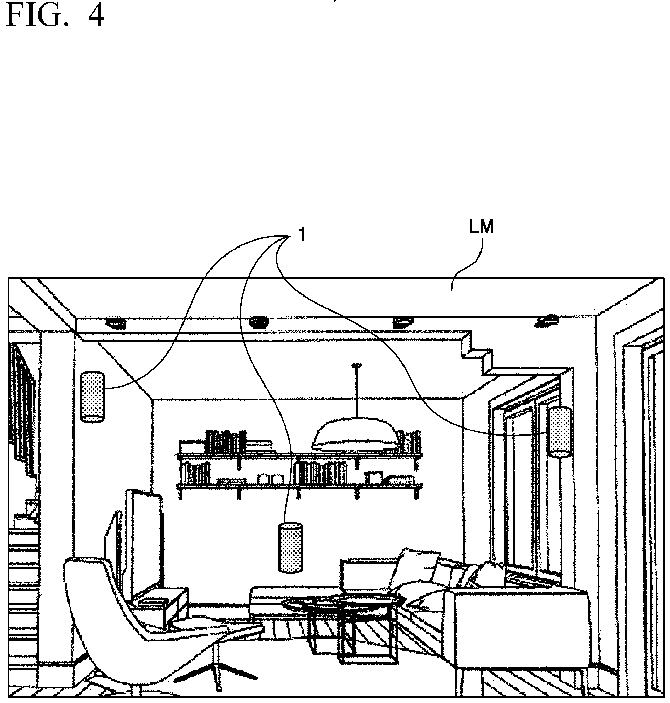

FIG. 4 is a view showing an example of a usage state of the imaging device 1 of the first embodiment. In the example shown in FIG. 4, as an example, the plurality of the imaging devices 1 of the first embodiment are installed on a wall surface or the like of a living room LM of a home where one or more users live. Further, the number of the imaging devices 1 installed indoors such as a living room LM or the like is not limited to plural but may be one.

In the example, the imaging device 1 almost always performs imaging of a target, which is at least a part of a person or an animal such as a pet or the like, in the living room LM, and records, for example, the daily life of a family by capturing a suitable shutter chance. The target is not limited to a person or an animal but may be another arbitrary object.

The first effective region EA1 of the first imaging element 15a captures the first imaging range CA1 that is a wide portion in the first image 14a, and transmits the imaging signal S1a to the image generating unit 32. The image generating unit 32 generates wide area image data corresponding to the first imaging range CA1 that is a wide portion in the first image 14a on the basis of the imaging signal S1a. The image corresponding to the wide area image data is also referred to as a wide area image hereinbelow.

The second effective region EA2 of the second imaging element 15b captures the second imaging range CA2 that is a portion of the second image 14b, and transmits the imaging signal S1b to the image generating unit 32. The image generating unit 32 generates a narrow area image data corresponding to the second imaging range CA2 that is a portion of the second image 14b on the basis of the imaging signal S1b. The image corresponding to the narrow area image data is also referred to as a narrow area image hereinbelow.

As described above, an array pitch (PXb, PYb) of a pixel PEb of the second imaging element 15b is smaller than an array pitch (PZa, PYa) of a pixel PEa of the first imaging element 15a. Accordingly, a resolution of a narrow area image captured by the second imaging element 15b is greater than a resolution of a wide area image captured by the first imaging element 15a. Accordingly, the narrow area image captured by the second imaging element 15b may also be referred to as a high resolution image.

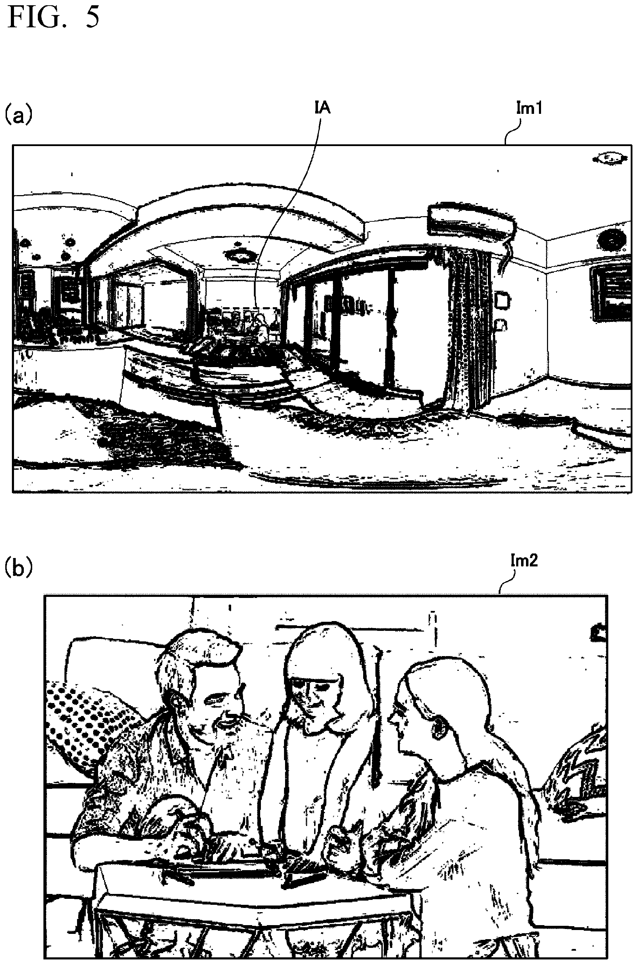

FIG. 5(a) is a view showing a wide area image Im1 on the basis of wide area image data of the living room LM as an example of the image captured by the first imaging element 15a of the imaging device 1, and as described above, the inside of the living room LM is captured over a wide range. The analysis unit 33 analyzes information of the target that can be included in the wide area image Im1 on the basis of the wide area image data captured by the first imaging element 15a.

For example, the analysis unit 33 detects existence or absence of an area of interest IA including at least a part of the image of the target to be captured or recorded, in particular, in the wide area image Im1 by analyzing the wide area image data that can include the information of the target generated by the image generating unit 32. Then, the analysis unit 33 calculates a position of the area of interest IA in the wide area image Im1 when the area of interest IA is detected.

The area of interest IA is, for example, a region including at least a part of the image (for example, an image of a part of the whole body, a face, or the like) of the target (for example, at least a part of a person, an animal, or the like) included in the image (for example, data of at least one of the wide area image and the narrow area image). Further, the area of interest IA may also be rephrased as a region including at least a part of the target included in the image data (for example, data of at least one of the wide area image data and the narrow area image data).

Further, detecting the presence or absence of the area of interest IA through analysis of the image data by the analysis unit 33 can also be rephrased as detecting the presence or absence of at least a portion of the image of the target (at least a portion of the target) through analysis of the image data by the analysis unit 33. Further, detecting the position of the area of interest IA on the image through analysis of the image data by the analysis unit 33 may be rephrased as calculating the position of at least the part of the image of the target on the image through analysis of the image data by the analysis unit 33.

Further, the analysis unit 33 may not detect the presence or absence of the area of interest IA, or may detect the presence or absence of at least the part of the image of the target included in the image (for example, the image of at least one of the wide area image and the narrow area image) through analysis of the image data (for example, data of at least one of the wide area image data and the narrow area image data) generated by the image generating unit 32, and calculate the position of at least the portion of the image of the target in the image.

Further, the target is not limited to at least a part of a person or animal, and may be any object that is an object of attention (for example, an object to be captured or recorded). For example, the target may be at least a part of something a person is wearing or carrying (clothes, shoes, bags, canes, etc.), dangerous objects such as guns or explosives, moving bodies such as vehicles, ships, aircraft (drones, or the like), buildings, or the like. For example, the target may be at least a part of the inside of a working chamber of a machine tool (a space in which a workpiece is machined by a machining tool) and the inside of a machining tool exchange device configured to exchange a machining tool attached to a main shaft of a working chamber with another type of machining tool.

For example, the analysis unit 33 may detect the presence or absence of the area of interest IA from the wide area image Im1 and calculate the position of the area of interest IA in the wide area image Im1 (when the area of interest IA is detected) by executing object detection processing through machine learning as analysis of the wide area image data (in other words, image data of the wide area image Im1). Further, calculating the position of the area of interest IA may be rephrased as detecting the position of the area of interest IA. As an example, the analysis unit 33 may detect the presence or absence of the area of interest IA by executing object detection processing through deep learning as analysis of the wide area image data. Further, the analysis unit 33 may not detect the presence or absence of the area of interest IA according to the type of the object detection processing to be executed, or may detect the presence or absence of at least the part of the image of the target in the wide area image Im1 through analysis of the wide area image data generated by the image generating unit 32 or calculate the position of the area of interest IA in the wide area image Im1 (when the area of interest IA is detected).

More specifically, the analysis unit 33 may execute detection of the presence or absence of the area of interest IA from the wide area image Im1 or calculation of the position of the area of interest IA in the wide area image Im1 using an object detection algorithm that uses a convolutional neural network (CNN). Further, the analysis unit 33 may execute detection of the presence or absence of the area of interest IA from the wide area image Im1 by another object detection processing through deep learning or calculation of the position of the area of interest IA in the wide area image Im1.

For example, the analysis unit 33, which is as a region proposal type, may use an object detection algorithm using a region with CNN features (R-CNN), a faster region with CNN features (Faster R-CNN), a mask region with CNN features (Mask R-CNN), or the like. In addition, the analysis unit 33 is not limited to a region proposal type but may use an object detection algorithm through another deep learning such as you only look once (YOLO), a single shot multibox detector (SSD), or the like.

Further, the analysis unit 33 is not limited to the deep learning but may detect the presence or absence of the area of interest IA using an algorithm such as linear regression, a decision tree, a support vector machine (SVM), or the like. Further, the analysis unit 33 is not limited to the machine learning but may execute detection of the presence or absence of the area of interest IA by conventional template matching processing or calculation of the position of the area of interest IA. Further, the analysis unit 33 may execute detection of the presence or absence of the area of interest IA and calculation of the position of the area of interest IA by conventional segmentation processing.

For example, since the wide area image Im1 shown in FIG. 5(a) includes images of multiple persons as the image of the target, the analysis unit 33 detects a region containing multiple persons indicated by a broken line as the area of interest IA. Further, when the area of interest IA to be detected is not limited to one and images of a plurality of targets are included in the wide area image Im1, the analysis unit 33 may detect the plurality of areas of interest IA including the images of the targets from the wide area image Im1.

The analysis unit 33 calculates the position of the area of interest IA in the wide area image Im1 when the area of interest IA is detected. Then, the analysis unit 33 transmits the position of the area of interest IA in the wide area image Im1 to the imaging range controller 34.

In other words, detection of the area of interest IA by the analysis unit 33 may be referred as recognition of the area of interest IA by the analysis unit 33. In addition, in other words, calculation of the position of the area of interest IA in the wide area image Im1 by the analysis unit 33 may be referred to as recognition of the position of the area of interest IA by the analysis unit 33.

The imaging range controller 34 sends the driving signal S3 to the driving part 16 according to an information signal from the analysis unit 33 (in other words, information related to the position of the area of interest IA in the wide area image Im1 as the detection results), moves the second imaging element 15b in a direction (for example, the direction in the XY plane) crossing the optical axis AX0, and causes the center CC (see FIG. 3(b)) of the second imaging range CA2 to substantially coincide with the center position of the area of interest IA. That is, the imaging range controller 34 executes movement of the second imaging element 15b by the driving part 16 on the basis of the wide area image data such that at least a part of the image of the target included in the second image 14b is included in the second imaging range CA2 by the second imaging element 15b (second imaging unit).

Further, the imaging range controller 34 may not move the second imaging element 15b such that the center CC of the second imaging range CA2 substantially coincides with the center position of the area of interest IA. The area of interest IA may be included in the second imaging range CA2, and for example, the imaging range controller 34 may move the second imaging element 15b such that the center CC of the second imaging range CA2 is disposed at a position separated from the center position of the area of interest IA by a predetermined distance.

Further, the analysis unit 33 may calculate the detected position of each of the plurality of areas of interest IA in the wide area image Im1 when the plurality of areas of interest IA are detected from the wide area image Im1. In this case, the imaging range controller 34 may move the second imaging element 15b in a direction (for example, the direction in the XY plane) crossing the optical axis AX0 such that at least one of the plurality of areas of interest IA is included in the second imaging range CA2.

Accordingly, an image corresponding to the area of interest IA is formed in the second imaging element 15b, and the second imaging element 15b captures a narrow area image Im2 shown in FIG. 5(b) corresponding to a portion of the area of interest IA in the wide area image Im1. Further, when a dimension of the area of interest IA is greater than the second imaging range CA2 of the second imaging element 15b, the second imaging element 15b captures the narrow area image Im2 corresponding to a part of the area of interest IA in the wide area image Im1, and when a dimension of the area of interest IA is smaller than the second imaging range CA2 of the second imaging element 15b, the second imaging element 15b captures the narrow area image Im2 including a range corresponding to the area of interest IA in the wide area image Im1.

In the imaging device 1, modification of the position of the center CC (see FIG. 3(b)) of the second imaging range CA2 can be performed by only movement of the second imaging element 15b in the direction in the XY plane without rotating the entire the imaging device 1 and without rotating the image formation optical system 10. Accordingly, in the imaging device 1, modification of the position of the second imaging range CA2 in the second image 14b can be performed at a high speed. Accordingly, modification of the imaging field of vision on the object side (target side) captured by the second imaging element 15b can be performed at a high speed.

Further, the analysis unit 33 may detect the presence or absence of the area of interest IA in the narrow area image Im2 by analyzing not only the wide area image data but also the narrow area image data (in other words, the image data of the narrow area image Im2). Then, when the analysis unit 33 detects the area of interest IA on the narrow area image Im2, the position of the area of interest IA in the narrow area image Im2 may be calculated.

The imaging range controller 34 may send the driving signal S3 to the driving part 16 according to the information signal from the analysis unit 33 (in other words, information related to the position of the area of interest IA in the narrow area image Im2 as the detection result), and move the second imaging element 15b such that the area of interest IA is included in the second imaging range CA2. That is, the imaging range controller 34 may execute movement of the second imaging element 15b by the driving part 16 on the basis of the narrow area image data.

Further, the analysis unit 33 may also perform analysis the target in the narrow area image Im2, and for example, detect whether a person or the like who is a target (in other words, a person or the like included in the area of interest) shows a specified facial expression such as a smile or the like or perform a specified gesture or a hand gesture.

For example, the analysis unit 33 may detect a specified facial expression such as a smile or the like, or a specified gesture or a hand gesture of a person or the like who is a target (a person or the like included in the area of interest) by executing the above-mentioned object detection processing, a conventional tracking processing (to be described below), or the like. Further, the analysis unit 33 may detect a specified facial expression such as a smile or the like, or a specified gesture or a hand gesture of a person or the like who is a target (a person or the like included in the area of interest) by not only the above-mentioned object detection processing or a conventional tracking processing but also another image processing.

Further, the analysis unit 33 may detect whether a person or the like included in the area of interest IA shows a specified facial expression such as a smile or the like or performs a specified gesture or a hand gesture on the basis of not only the narrow area image data but also the wide area image data, and perform any one operation of the following operations A to F.

Then, when the facial expression or the gesture or hand gesture with respect to the target is detected, the analysis unit 33 may perform any one or more operations of the following operations A to F.
A: An instruction of causing the second imaging element 15b to capture a still image is issued to the imaging controller 31.
B: An instruction of causing the second imaging element 15b to start or end output of low resolution moving image data is issued to the imaging controller 31.
C: An instruction of causing the second imaging element 15b to start or end output of high resolution moving image data is issued to the imaging controller 31.
D: An instruction of starting or ending memory of narrow area image data captured by the second imaging element 15b and generated by the image generating unit 32 is issued to the storage unit 35.
E: An instruction of starting or ending postscript of a predetermined identification signal (flag) on the narrow area image data in the memory is issued to the storage unit 35.
F: An instruction of starting or ending transmission of the narrow area image data captured by the second imaging element 15b and generated by the image generating unit 32 to an external instrument (for example, a display device configured to display the narrow area image Im2) is issued to the interface part 36.

Further, in the case in which the analysis unit 33 detects the facial expression or the gesture or hand gesture of the target and starts any one operation of the above-mentioned A to F, once a predetermined time has elapsed, the analysis unit 33 may terminate those operations.

Further, when a positional relation between the imaging device 1 and the target is changed, the analysis unit 33 may detect the presence or absence of the movement of the area of interest IA (in other words, movement of the image of at least the portion of the target) in the wide area image Im1. Then, the analysis unit 33 may calculate a moving direction and a moving quantity of the area of interest IA in the wide area image Im1 when the area of interest IA is moved.

The analysis unit 33 transmits the moving direction and the moving quantity of the area of interest IA in the wide area image Im1 to the imaging range controller 34. Further, the moving direction and the moving quantity of the area of interest IA in the wide area image Im1 calculated by the analysis unit 33 may be rephrased as the position of the area of interest IA in the wide area image Im1. Further, calculating the moving direction and the moving quantity of the area of interest IA by the analysis unit 33 may be rephrased as detecting the moving direction and the moving quantity of the area of interest IA by the analysis unit 33.

The imaging range controller 34 may send the driving signal S3 to the driving part 16 according to the information signal from the analysis unit 33 (in other words, the information related to the moving direction and the moving quantity of the area of interest IA in the wide area image Im1 as the detection results), and move the second imaging element 15b in the direction crossing the optical axis AX0 (for example, in the direction in the XY plane) such that the area of interest IA is not deviated from the second imaging range CA2. That is, when the positional relation between the target and the imaging device 1 is changed, the imaging range controller 34 may execute movement of the second imaging element 15b (second imaging unit) by the driving part 16 such that the area of interest IA is not deviated from the second imaging range CA2 on the basis of the image data of the wide area image Im1.

Accordingly, the imaging device 1 can continue generation of the narrow area image Im2 of the area of interest IA (in other words, a high resolution image of at least a part of the target) without the area of interest IA being deviated from the second imaging range CA2 of the imaging device 1 even when the area of interest IA in the wide area image Im1 (in other words, the image of at least the portion of the target) is moved by changing the positional relation between the imaging device 1 and the target.

For example, the analysis unit 33 may detect movement of the area of interest IA between the plurality of wide area images Im1 captured by the first imaging element 15a on different times (in other words, may detect the presence or absence of the movement of the area of interest IA and calculate the moving direction and the moving quantity of the area of interest IA) by executing conventional tracking processing.

As an example, the analysis unit 33 may detect the area of interest IA from each of the wide area images Im1 captured on different times by conventional template matching processing using the image data of the area of interest IA detected from the wide area image Im1 through the above-mentioned object detection processing as a template, and calculate the moving direction and the moving quantity of the area of interest IA on the wide area image Im1 (in other words, the position of the area of interest IA on the wide area image Im1).

Further, the analysis unit 33 may detect the area of interest IA from each of the wide area images Im1 captured on different times, and detect the presence or absence of the movement of the area of interest IA on the basis of the presence or absence of the displacement of the area of interest IA on the wide area image Im1.

Then, the analysis unit 33 may transmit the calculated moving direction and moving quantity of the area of interest IA in the wide area image Im1 to the imaging range controller 34. The imaging range controller 34 may receive the information signal from the analysis unit 33 (in other words, information related to the moving direction and the moving quantity of the area of interest IA in the wide area image Im1 as the detection results), and calculate the moving direction and the moving quantity of the second imaging range CA2 on the basis of the information signal. The imaging range controller 34 may send the driving signal S3 to the driving part 16 according to the calculated moving direction and moving quantity of the second imaging range CA2, and move the second imaging element 15b in the direction crossing the optical axis AX0 such that the area of interest IA is not deviated from the second imaging range CA2.

Further, even though at least the part of the area of interest IA is deviated from the second imaging range CA2 according to the change in the positional relation between the imaging device 1 and the target, if the area of interest IA is included in the wide area image Im1, since the position (the moving direction and the moving quantity) of the area of interest IA in the wide area image Im1 can be detected by the analysis unit 33, the imaging range controller 34 can move the position of the second imaging element 15b such that the area of interest IA is included in the second imaging range CA2.

Further, the analysis unit 33 may calculate the moving direction and moving quantity in the wide area image Im1 of each of the detected plurality of areas of interest IA when movement of the plurality of areas of interest IA in the wide area image Im1 is detected by the above-mentioned tracking processing. In this case, the imaging range controller 34 may move the second imaging element 15b in the direction crossing the optical axis AX0 (for example, the direction in the XY plane) such that at least one of the plurality of areas of interest IA is not deviated from the second imaging range CA2.

Further, the analysis unit 33 may execute detection of the presence or absence of the movement of the area of interest IA in the image (at least one of the wide area image Im1 and the narrow area image Im2) or calculation of the moving direction and the moving quantity in the image using not only the template matching processing but also another conventional tracking processing. Further, the analysis unit 33 may execute detection of the presence or absence of the movement in the image or calculation of the moving direction and the moving quantity of the area of interest IA in the image using not only the conventional tracking processing but also another conventional image processing.

Further, the analysis unit 33 may predict the moving direction and the moving quantity of the area of interest IA per the next predetermined time using conventional deep learning on the basis of the moving direction and the moving quantity of the area of interest IA in the wide area image Im1 calculated through the above-mentioned tracking processing on the basis of the wide area image data captured on different times.

In this case, the analysis unit 33 may transmit the moving direction and the moving quantity of the area of interest IA in the wide area image Im1 per a predetermined predicted time to the imaging range controller 34. Further, predicting the moving direction and the moving quantity using the analysis unit 33 can be rephrased as detecting the moving direction and the moving quantity using the analysis unit 33 in the future. Further, the moving direction and the moving quantity of the area of interest IA in the wide area image Im1 predicted by the analysis unit 33 may be rephrased as the position of the area of interest IA in the wide area image Im1 in the future.

The imaging range controller 34 may receive the information signal from the analysis unit 33 (in other words, prediction information related to the moving direction and the moving quantity of the area of interest IA in the wide area image Im1 as the detection results), and calculate (predict) the moving direction and the moving quantity of the second imaging range CA2. The imaging range controller 34 may send the driving signal S3 to the driving part 16 according to the calculated moving direction and moving quantity of the second imaging range CA2, and move the second imaging element 15b in the direction crossing the optical axis AX0 such that the area of interest IA is not deviated from the second imaging range CA2.

That is, when the positional relation between the target and the imaging device 1 is changed, the imaging range controller 34 may execute movement of the second imaging element 15b (second imaging unit) by the driving part 16 such that the area of interest IA is not deviated from the second imaging range CA2 on the basis of the image data of the wide area image Im1.

In addition, the imaging range controller 34 may receive the information signal from the analysis unit 33 (in other words, prediction information related to the moving direction and the moving quantity of the area of interest IA in the wide area image Im1 as the detection results), and move the second imaging element 15b such that the position of the area of interest IA in the second imaging range CA2 is substantially not changed before and after the change in the positional relation between the target and the imaging device 1 on the basis of the information signal. That is, the imaging range controller 34 may move the position of the second imaging element 15b such that the position of the area of interest IA in the second imaging range CA2 is substantially not changed before and after the change in the positional relation between the target and the imaging device 1 on the basis of the image data of the wide area image Im1.

Further, the analysis unit 33 may execute detection of the presence or absence of the movement of the area of interest IA in the narrow area image Im2 and calculation of the moving direction and the moving quantity in the narrow area image Im2 by executing the above-mentioned tracking processing on the basis of not only the wide area image Im1 but also the narrow area image data. As an example, the analysis unit 33 may detect the area of interest IA from the narrow area image Im2 captured at a second time after a predetermined time through conventional template matching processing using the image data of the area of interest IA detected from the narrow area image Im2 captured at a first time through the above-mentioned object detection processing as a template, and execute detection of the presence or absence of the movement of the area of interest IA and calculation of the moving direction and the moving quantity of the area of interest IA between the first time and the second time.

Then, the analysis unit 33 may transmit the moving direction and the moving quantity of the area of interest IA in the narrow area image Im2 to the imaging range controller 34. Further, the moving direction and the moving quantity of the area of interest IA in the narrow area image Im2 calculated by the analysis unit 33 may be rephrased as the position of the area of interest IA in the narrow area image Im2.

The imaging range controller 34 may receive the information signal from the analysis unit 33 (in other words, information related to the moving direction and the moving quantity of the area of interest IA in the narrow area image Im2 as the detection results), send the driving signal S3 according to the information signal to the driving part 16, and move the second imaging element 15b in the direction crossing the optical axis AX0 such that the area of interest IA is not deviated from the second imaging range CA2.

That is, when the positional relation between the target and the imaging device 1 is changed, the imaging range controller 34 may execute movement of the second imaging element 15b (second imaging unit) by the driving part 16 such that the area of interest IA is not deviated from the second imaging range CA2 on the basis of the image data of the narrow area image Im2. Accordingly, the imaging device 1 can continue to generate the narrow area image Im2 of the area of interest IA without deviation of the area of interest IA from the second imaging range CA2 of the imaging device 1 even when the positional relation between the target and the imaging device 1 is changed.

Further, the analysis unit 33 may predict the moving direction and the moving quantity of the area of interest IA in the narrow area image Im2 per the subsequent predetermined time through conventional deep learning on the basis of the moving direction and the moving quantity of the area of interest IA on the narrow area image Im2 between different times calculated through the above-mentioned tracking processing on the basis of the narrow area image data captured on the different times. In this case, the analysis unit 33 may transmit the moving direction and the moving quantity of the area of interest IA per the subsequent predetermined predicted time to the imaging range controller 34. Further, the moving direction and the moving quantity of the area of interest IA in the narrow area image Im2 predicted by the analysis unit 33 may be rephrased as the position of the area of interest IA in the predicted narrow area image Im2.

The imaging range controller 34 may receive the information signal from the analysis unit 33 (in other words, prediction information related to the moving direction and the moving quantity of the area of interest IA in the subsequent the narrow area image Im2 as the detection results), send the driving signal S3 according to the information signal to the driving part 16, and move the second imaging element 15b in the direction crossing the optical axis AX0 such that the area of interest IA is not deviated from the second imaging range CA2.

That is, when the positional relation between the target and the imaging device 1 is changed, the imaging range controller 34 may execute movement of the second imaging element 15b (second imaging unit) by the driving part 16 such that the area of interest IA is not deviated from the second imaging range CA2 on the basis of the image data of the narrow area image Im2.

In addition, the imaging range controller 34 may receive the information signal from the analysis unit 33 (in other words, prediction information related to the moving direction and the moving quantity of the area of interest IA in the narrow area image Im2 as the detection results), and move the second imaging element 15b such that the position of the area of interest IA in the second imaging range CA2 is substantially not changed before and after the change in the positional relation between the target and the imaging device 1 on the basis of the information signal.

That is, the imaging range controller 34 may move the position of the second imaging element 15b such that the position of the area of interest IA in the second imaging range CA2 is substantially not changed before and after the change in the positional relation between the target and the imaging device 1 on the basis of the image data of the narrow area image Im2.

Further, the analysis unit 33 may determine that the area of interest IA is deviated from the second imaging range CA2 when the area of interest IA cannot be detected on the narrow area image Im2 through the above-mentioned object detection processing according to the change in the positional relation between the target and the imaging device 1, or the like.

In this case, the analysis unit 33 detects the presence or absence of the area of interest IA in the wide area image Im1 by analyzing the wide area image data at this time. Then, the analysis unit 33 may calculate the position of the area of interest IA in the wide area image Im1 when the area of interest IA is detected.

The imaging range controller 34 may receive the information signal from the analysis unit 33 (in other words, information related to the position of the area of interest IA in the wide area image Im1), and move the second imaging element 15b such that the area of interest IA is included in the second imaging range CA2 according to the information signal.

That is, when the positional relation between the target and the imaging device 1 is changed and at least a part of the image of the target is deviated from the second imaging range CA2, the imaging range controller 34 may execute movement of the second imaging element 15b (second imaging unit) by the driving part 16 such that the area of interest IA is included in the second imaging range CA2 on the basis of the image data of the wide area image Im1.

Further, when the analysis unit 33 cannot detect the area of interest IA on the narrow area image Im2, the analysis unit 33 may not analyze the wide area image data at this time. In this case, the imaging range controller 34 may search the area of interest IA by moving the second imaging element 15b along a predetermined path in the direction crossing the optical axis AX0 (for example, the direction in the XY plane). Then, the second imaging element 15b may be stopped at a position in which the area of interest IA is included in the second imaging range CA2. Further, the analysis unit 33 may detect that the area of interest IA is included in the second imaging range CA2 through the above-mentioned object detection processing.

Further, the imaging device 1 can continue to capture the narrow area image Im2 of the area of interest IA not only when only the target (to be captured or recorded) contained in the area of interest IA is moved with respect to the imaging device 1 but also when the imaging device 1 and the target relatively move.

Further, in the example shown in FIG. 4, the imaging device 1 is installed in the living room LM but not limited thereto. For example, one or the plurality of imaging devices 1 may be installed in a predetermined place inside a building to capture and record any object (target to be captured or recorded).

As an example, the imaging device may be installed in a predetermined indoor place such as a nursery school, a school, a medical facility, a nursing care facility, a conference room, a shop, a station, or the like, and any object such as a person or the like, can be captured or recorded as a target to be captured or recorded. Further, one or the plurality of imaging devices 1 may be installed at a predetermined place in the moving body to capture or record any object (target).

As an example, the imaging device may be installed in a predetermined place of a moving body such as a vehicle, a ship, or an aircraft, and any object from the moving body may be captured or recorded as a target. Further, for example, one or the plurality of imaging devices 1 may be installed at a predetermined outdoor place and capture and record any object (target) such as a person, an animal, or the like. As an example, one or the plurality of imaging devices 1 may be installed in a predetermined place of a building such as a vending machine, a street light, a telephone pole, a bridge, an entrance or an exit of a store or a station to capture and record any object (target).

Alternatively, the imaging device 1 may be installed in a working chamber of a machine tool. Then, a machining tool attached to a main shaft of a working chamber, a workpiece placed on a stage of the working chamber, a machining point of the workpiece by the machining tool, chips generated by machining of the workpiece by machining tool, a cutting fluid applied to a machining portion by the machining tool, and the like, may be used as targets. For example, an accommodated machining tool or the like may be used as the target as the inside of an exchange device configured to exchange the machining tool attached to the main shaft of the working chamber with another type of machining tool.

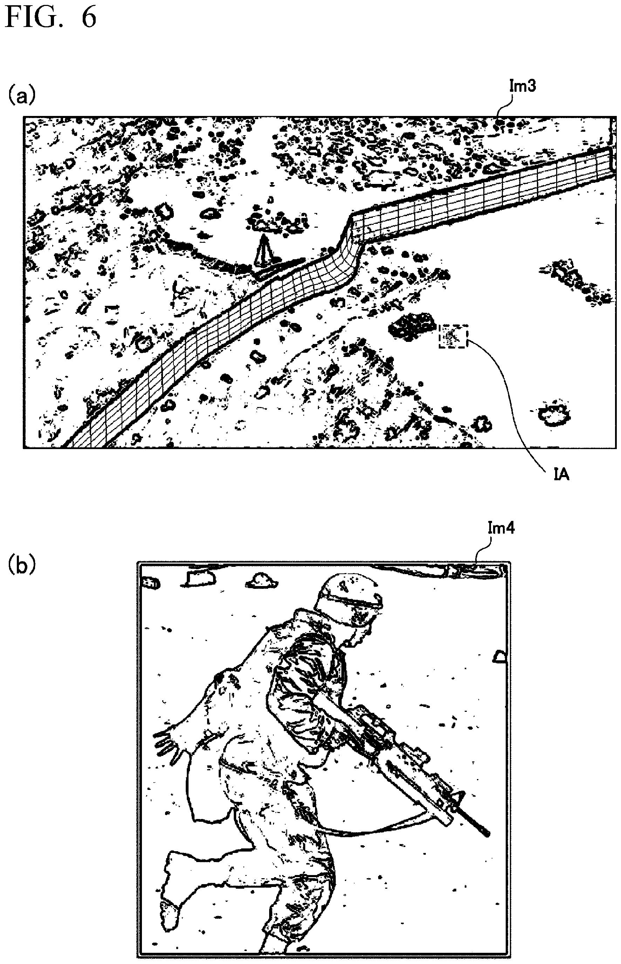

FIG. 6 is a view showing an example of the image on the basis of the image data generated by the capturing of the imaging device 1 in another example of the usage state of the imaging device 1 of the first embodiment. In the example, the imaging device 1 is installed outdoors, for example, and is used as a monitoring camera that monitors the surroundings of the imaging device 1. Further, even when the imaging device is used as the monitoring camera, one or the plurality of imaging devices 1 may be installed in the indoors.

Further, one or the plurality of imaging devices 1 may be installed as a monitoring camera in any predetermined place where monitoring is required, such as shops, stations, airports, medical facilities, nursing homes, prisons, military facilities, borders, roads, parks, or the like, and any object may be captured or recorded as a target to be captured or recorded. Further, one or the plurality of imaging devices 1 may be installed in a moving body such as a vehicle, a ship, or an aircraft (drone, or the like) to capture and record any object (target) that needs to be monitored from the moving body.

FIG. 6(a) is a view showing a wide area image Im3 on the basis of wide area image data obtained by capturing a landscape surrounding the imaging device 1 installed outdoors as an example of the image captured by the first imaging range CA1 of the first imaging element 15a of the imaging device 1. The analysis unit 33 analyzes information of the target that can be included in the wide area image Im3 on the basis of wide area image data, and in particular, detects the presence or absence of the area of interest IA in which at least a portion of the target to be captured or recorded is included. Further, the analysis unit 33 may detect the area of interest IA by executing the above-mentioned object detection processing, like the usage state of the imaging device 1 shown in FIG. 4 and FIG. 5 as described above. Further, the image data of the wide area image Im3 may be referred to as the wide area image data.

The wide area image Im3 shown in FIG. 6(a) includes an image of a person as the target, and as an example, the analysis unit 33 detects a region including the image of at least the portion of the person shown by a broken line as the area of interest IA. The analysis unit 33 calculates a position of the area of interest IA in the wide area image Im3, and transmits the calculated position to the imaging range controller 34.

Like the usage state of the imaging device 1 shown in FIG. 4 and FIG. 5 as described above, the imaging range controller 34 sends the driving signal S3 to the driving part 16 according to the information signal from the analysis unit 33 (in other words, information related to the position of the area of interest IA in the wide area image Im3 as the detection results), moves the second imaging element 15b in the direction in the XY plane as an example, and causes the center CC (see FIG. 3(b)) of the second imaging range CA2 to substantially coincide with the center position of the area of interest IA.

Accordingly, the image of the target corresponding to the area of interest IA is formed on the second imaging element 15b, and the imaging device 1 captures a narrow area image Im4 shown in FIG. 6(b) corresponding to the narrow area image of the portion of the area of interest IA in the wide area image Im3.

Further, since the area of interest IA may be included in the second imaging range CA2, the imaging range controller 34 may move the second imaging element 15b such that the center CC of the second imaging range CA2 is disposed at the position separated from the center position of the area of interest IA by a predetermined distance. Further, the image data of the narrow area image Im4 may be referred to as the narrow area image data.

Like the usage state of the imaging device 1 shown in FIG. 4 and FIG. 5 as described above, the analysis unit 33 may detect the presence or absence of the movement of the area of interest IA in the wide area image Im3. When the target (person, animal, or the like) to be captured or recorded and the imaging device 1 are relatively moved (in other words, when the positional relation between the target and the imaging device 1 is changed), the analysis unit 33 may calculate the moving direction and the moving quantity of the area of interest IA in the wide area image Im3. The analysis unit 33 transmits the calculated moving direction and moving quantity of the area of interest IA in the wide area image Im3 to the imaging range controller 34.

Like the usage state of the imaging device 1 shown in FIG. 4 and FIG. 5 as described above, the imaging range controller 34 may send the driving part 16 to the driving signal S3 according to the information signal from the analysis unit 33 (in other words, information related to the moving direction and the moving quantity of the area of interest IA in the wide area image Im3 as the detection results), and move the second imaging element 15b in the direction crossing the optical axis AX0 such that the area of interest IA is not deviated from the second imaging range CA2.

Accordingly, the imaging device 1 can continue to generate the narrow area image Im4 of the area of interest IA (in other words, a high resolution image of at least a portion of the target) without the area of interest IA being deviated from the second imaging range CA2 of the imaging device 1 even when the area of interest IA in the wide area image Im3 is moved by changing the positional relation between the imaging device 1 and the target.

Further, like the usage state of the imaging device 1 shown in FIG. 4 and FIG. 5 as described above, the analysis unit 33 may detect movement of the area of interest IA between the plurality of wide area images Im3 captured by the second imaging element 15b on different times by executing the above-mentioned tracking processing (in other words, may detect the presence or absence of the movement of the area of interest IA or detect the moving direction and the moving quantity of the area of interest IA). Further, the analysis unit 33 may detect movement of the area of interest IA by not only the conventional tracking processing but also another conventional image processing.

Further, even though at least a part of the area of interest IA is deviated from the second imaging range CA2 according to the change in the positional relation between the imaging device 1 and the target, if the area of interest IA is included in the wide area image Im3, since the position (the moving direction and the moving quantity) of the area of interest IA in the wide area image Im3 can be detected by the analysis unit 33, the imaging range controller 34 can move the position of the second imaging element 15b such that the area of interest IA is included in the second imaging range CA2.

Further, like the usage state of the imaging device 1 shown in FIG. 4 and FIG. 5 as described above, the analysis unit 33 may predict the moving direction and the moving quantity of the area of interest IA per the next predetermined time using conventional deep learning on the basis of the moving direction and the moving quantity of the area of interest IA in the wide area image Im3 calculated by the above-mentioned tracking processing on the basis of the wide area image data captured on different times.

In this case, the analysis unit 33 may transmit the moving direction and the moving quantity of the area of interest IA in the wide area image Im3 per the predetermined predicted time to the imaging range controller 34. Further, the moving direction and the moving quantity of the area of interest IA in the wide area image Im3 predicted by the analysis unit 33 may be rephrased as the position of the area of interest IA in the wide area image Im3.

Like the usage state of the imaging device 1 shown in FIG. 4 and FIG. 5 as described above, the imaging range controller 34 may send the driving signal S3 to the driving part 16 according to the information signal from the analysis unit 33 (in other words, prediction information related to the moving direction and the moving quantity of the area of interest IA in the wide area image Im3 as the detection results), and move the second imaging element 15b in the direction crossing the optical axis AX0 such that the area of interest IA is not deviated from the second imaging range CA2.

In addition, like the usage state of the imaging device 1 shown in FIG. 4 and FIG. 5 as described above, the imaging range controller 34 may receive the information signal from the analysis unit 33 (in other words, prediction information related to the moving direction and the moving quantity of the area of interest IA in the wide area image Im3 as the detection result), and move the second imaging element 15b such that the position of the area of interest IA in the second imaging range CA2 is substantially not changed before and after the change in the positional relation between the target and the imaging device 1 on the basis of the information signal.

Further, the analysis unit 33 may execute detection of the presence or absence of the movement of the area of interest IA in the narrow area image Im4 and calculation of the moving direction and the moving quantity in the narrow area image Im4 by executing the above-mentioned tracking processing like the usage state of the imaging device 1 shown in FIG. 4 and FIG. 5 as described above, on the basis of not only the wide area image data but also the narrow area image data.

Then, the analysis unit 33 may transmit the moving direction and the moving quantity of the area of interest IA in the narrow area image Im4 to the imaging range controller 34. Further, the moving direction and the moving quantity of the area of interest IA in the narrow area image Im4 calculated by the analysis unit 33 may be rephrased as the position of the area of interest IA in the narrow area image Im4.

Like the usage state of the imaging device 1 shown in FIG. 4 and FIG. 5 as described above, the imaging range controller 34 may receive the information signal from the analysis unit 33 (in other words, information related to the moving direction and the moving quantity of the area of interest IA in the narrow area image Im4 as the detection results), send the driving signal S3 according to the information signal to the driving part 16, and move the second imaging element 15b in the direction crossing the optical axis AX0 such that the area of interest IA is not deviated from the second imaging range CA2.

Further, like the usage state of the imaging device 1 shown in FIG. 4 and FIG. 5 as described above, the analysis unit 33 may predict the moving direction and the moving quantity of the area of interest IA in the narrow area image Im4 per the subsequent predetermined time through conventional deep learning on the basis of the moving direction and the moving quantity of the area of interest IA in the narrow area image Im4 calculated by the above-mentioned tracking processing on the basis of the narrow area image data captured on different times.

In this case, the analysis unit 33 may transmit the moving direction and the moving quantity of the area of interest IA per the subsequent predetermined predicted time to the imaging range controller 34. Further, the moving direction and the moving quantity of the area of interest IA in the narrow area image Im4 predicted by the analysis unit 33 may be rephrased as the predicted position of the area of interest IA in the narrow area image Im4.

Like the usage state of the imaging device 1 shown in FIG. 4 and FIG. 5 as described above, the imaging range controller 34 may receive the information signal from the analysis unit 33 (in other words, prediction information related to the moving direction and the moving quantity of the area of interest IA in the subsequent narrow area image Im4 as the detection results), send the driving signal S3 according to the information signal to the driving part 16, and move the second imaging element 15b in the direction crossing the optical axis AX0 such that the area of interest IA is not deviated from the second imaging range CA2.

In addition, the imaging range controller 34 may receive the information signal from the analysis unit 33 (in other words, prediction information related to the moving direction and the moving quantity of the area of interest IA in the narrow area image Im4 as the detection results), and move the second imaging element 15b such that the position of the area of interest IA in the second imaging range CA2 is substantially not changed before and after the change in the positional relation between the target and the imaging device 1 on the basis of the information signal.

Further, like the usage state of the imaging device 1 shown in FIG. 4 and FIG. 5 as described above, the analysis unit 33 may determine that the area of interest IA is deviated from the second imaging range CA2 when the area of interest IA cannot be detected on the narrow area image Im4 by the above-mentioned object detection processing according to the change in the positional relation between the target and the imaging device 1, or the like.

In this case, the analysis unit 33 detects the presence or absence of the area of interest IA in the wide area image Im3 by analyzing the wide area image data at this time. Then, the analysis unit 33 may calculate the position of the area of interest IA in the wide area image Im3 when the area of interest IA is detected.

Like the usage state of the imaging device 1 shown in FIG. 4 and FIG. 5 as described above, the imaging range controller 34 may receive the information signal from the analysis unit 33 (in other words, information related to the position of the area of interest IA in the wide area image Im3), and move the second imaging element 15b such that the area of interest IA is included in the second imaging range CA2 according to the information signal.

Further, like the usage state of the imaging device 1 shown in FIG. 4 and FIG. 5 as described above, when the analysis unit 33 cannot detect the area of interest IA on the narrow area image Im4, the analysis unit 33 may not analyze the wide area image data at this time. In this case, the imaging range controller 34 may search the area of interest IA by moving the second imaging element 15b in a predetermined path in the direction crossing the optical axis AX0. Then, the second imaging element 15b may be stopped at a position where the area of interest IA is included in the second imaging range CA2.

Even in the example shown in FIG. 6, the imaging device 1 may perform at least one of the operations A to F described above in the same manner as in the example shown in FIG. 5. In addition, the analysis unit 33 sets dangerous materials such as guns and bombs as targets and analyzes whether a person in the area of interest IA is in possession of dangerous materials such as guns or bombs, and when the person is in possession of the predetermined dangerous materials, at least one of the above-mentioned operations A to F may be performed.

Further, positional relations between the first image 14a and the first imaging element 15a and between the second image 14b and the second imaging element 15b may be reversed. That is, the first image 14a may be an image passing through the dividing and reflecting surface 13a of the light division member 13 and formed by the light flux advancing substantially along the optical axis AX0. The first imaging element 14a may be disposed at a position that substantially coincides with the first image 14a. Further, in this case, the light flux passing through the dividing and reflecting surface 13a of the light division member 13 and advancing substantially along the optical axis AX0 is referred to as a light flux on one side.

Then, the second image 14b may be an image reflected by the dividing and reflecting surface 13a of the light division member 13 and formed by the light flux advancing substantially along the optical axis AX1. The second imaging element 15b may be disposed at a position that substantially coincides with the second image 14b. In this case, the second imaging element 15b is held by the holding part 17, and is held movably by the driving part 16 together with the holding part 17 in the Y direction and the Z direction, which are directions crossing the optical axis AX1. Further, in this case, the light flux reflected by the dividing and reflecting surface 13a of the light division member 13 and advancing substantially along the optical axis AX1 is referred to as the other light flux.

Further, as described above, while the array pitch (PXb, PYb) of the second pixels PEb of the second imaging element 15b is smaller than the array pitch (PZa, PYa) of the first pixels PEa of the first imaging element 15a, it is not necessarily limited thereto. The array pitch (PXb, PYb) of the second pixels PEb may be the same as the array pitch (PZa, PYa) of the first pixels PEa of the first imaging element 15a, or may be greater than the array pitch (PZa, PYa) of the first pixels PEa of the first imaging element 15a.

In addition, as described above, while the area of the second effective region EA2 of the second imaging element 15b is smaller than that of the first effective region EA1 of the first imaging element 15a, it is not necessarily limited thereto. The area of the second effective region EA2 of the second imaging element 15b may be the same as that of the first effective region EA1 of the first imaging element 15a or may be smaller than that of the first effective region EA1 of the first imaging element 15a.

Further, the controller 30 does not necessarily need to be configured integrally with the imaging device 1 (or the imaging device 1A described below), and may be disposed separately from the imaging device 1 (or the imaging device 1A described below). That is, the imaging device 1 (or the imaging device 1A described below) does not necessarily have to include the controller 30. In this case, the imaging signals S1a and S1b, the control signals S2a and S2b, and the driving signal S3 may be transmitted between the imaging device 1 (or the imaging device 1A described below) and the controller 30, for example, through a network line or in a wireless manner.

Further, the imaging device 1 (or the imaging device 1A described below) may include some of the imaging controller 31 of the controller 30, the image generating unit 32, the analysis unit 33, the imaging range controller 34, the storage unit 35, and the interface part 36, and the other may be disposed to be separated from the imaging device 1 (or the imaging device 1A described below).

Further, for example, when the imaging device 1 (or the imaging device 1A described below) is installed on an object, a control device configured to control the object may include the controller 30 (or some of the imaging controller 31, the image generating unit 32, the analysis unit 33, the imaging range controller 34, the storage unit 35, and the interface part 36). In other words, the control device configured to control the object may be configured to execute functions of the controller 30 (or functions of some of the imaging controller 31, the image generating unit 32, the analysis unit 33, the imaging range controller 34, the storage unit 35, and the interface part 36).

For example, when the imaging device 1 (or the imaging device 1A described below) is installed on a moving body, a machine tool, a light processing machine, or the like, a control device configured to control the moving body, the machine tool, or the light processing machine may include the controller 30 (or some of the imaging controller 31, the image generating unit 32, the analysis unit 33, the imaging range controller 34, the storage unit 35, and the interface part 36). In other words, the control device configured to control the moving body or the machine tool may be configured to execute functions of the controller 30 (or functions of some of the imaging controller 31, the image generating unit 32, the analysis unit 33, the imaging range controller 34, the storage unit 35, and the interface part 36).

In addition, the imaging device 1 does not necessarily have to include the holding part 17 configured to hold the second imaging element 15b, and the driving part 16 may be configured to directly hold the second imaging element 15b without intervention of the holding part 17.

Further, the imaging device 1 may include an image re-formation optical system (not shown) configured to form the second image 14b again.

For example, the image re-formation optical system may be disposed between the light division member 13 and the second imaging element 15b, and the second image 14b formed by the light flux divided by the light division member 13 (the other light flux) may be formed again. Then, an image of a portion of the second image 14b formed again may be captured by the second imaging element 15b. In this case, the second imaging element 15b may be disposed in the vicinity of the position where the second image 14b is formed again by the image re-formation optical system. Further, both the image re-formation optical system and the second imaging element 15b may also be referred to as a second imaging unit.

Further, the image re-formation optical system may be fixed to the housing 19 via a holding part (not shown).

Further, the image re-formation optical system may include at least one optical member. Further, the optical member included in the image re-formation optical system may include a lens. Further, the image re-formation optical system may include a plurality of lenses. In this case, each of the plurality of lenses may be a sheet of lens, or may be a lens group constituted by a plurality of lenses. Further, the image re-formation optical system may include four sheets of lenses. Further, the image re-formation optical system may include four lens groups.

Further, an image formation magnification of the image re-formation optical system may be an enlargement magnification, may be an equal magnification, or may be a reduction magnification. In addition, the image formation magnification may be changed by moving at least some lenses of the image re-formation optical system in an optical axis direction (for example, the optical axis AX0 direction) using a driving unit (not shown). In this case, the image formation magnification may be increased or decreased as the enlargement magnification, may be increased or decreased as the reduction magnification, or may be increased or decreased within the range from the enlargement magnification to the reduction magnification.

Further, when the image formation magnification of the image re-formation optical system is the enlargement magnification, the image of the target enlarged compared to the case in which there is no image re-formation optical system (in other words, compared to the equal magnification) can be captured (the narrow area image of the target enlarged more can be acquired). Further, in this case, at least a part of the second image 14b enlarged compared to the case in which there is no image re-formation optical system (in other words, compared to the equal magnification) can be captured.

Further, when the image formation magnification of the image re-formation optical system is the enlargement magnification, a positioning resolution of the second imaging element 15b with respect to the second image 14b can be increased compared to the case in which there is no image re-formation optical system (in other words, compared to the equal magnification). On the contrary, when the positioning resolution of the second imaging element 15b with respect to the second image 14b may be equal to the case in which there is no image re-formation optical system (in other words, the case of the equal magnification), since the driving resolution of the driving part 16 (positioning resolution of the second imaging element 15b by the driving part 16) can be lowered, a conventional inexpensive driving mechanism can be used in the driving part 16.

Further, when the image formation magnification of the image re-formation optical system is the enlargement magnification, compared to the case in which there is no image re-formation optical system (in other words, compared to the equal magnification), the positioning resolution within the range on the object side (target side) captured by the second imaging element 15b via an image formation optical system 20 can be increased.

Further, when the image formation magnification of the image re-formation optical system is the reduction magnification, an image of the target in a wider range compared to the case in which there is no image re-formation optical system (in other words, compared to the equal magnification) can be captured (the narrow area image of the target in a wider range can be acquired). Further, in this case, a part of the wider range of the second image 14b compared to the case in which there is no image re-formation optical system (in other words, compared to the equal magnification) can be captured.

Further, when the image formation magnification of the image re-formation optical system is the reduction magnification, the position of the second imaging element 15b with respect to the second image 14b can be changed at a higher speed compared to the case in which there is no image re-formation optical system (in other words, compared to the equal magnification). On the contrary, when the displacement speed of the second imaging element 15b with respect to the second image 14b may be the same as in the case in which there is no image re-formation optical system (in other words, the case of the equal magnification), since the driving speed of the driving part 16 (the displacement speed of the second imaging element 15b by the driving part 16) can be lowered, a conventional inexpensive driving mechanism may be used in the driving part 16.

Further, when the image formation magnification of the image re-formation optical system is the reduction magnification, compared to the case in which there is no image re-formation optical system (in other words, compared to the equal magnification), a range on the object side (target side) captured by the second imaging element 15b via the image formation optical system 20 can also be changed at a higher speed.

Further, the imaging device 1 may have a distance measurement unit configured to measure a distance from the imaging device 1 to the target or the like. For example, the distance measurement unit may be referred to as a so-called LiDAR that measures the distance by measuring a time until light is radiated to a target or the like and the light returns to the distance measurement unit. Alternatively, the distance to the target may be approximately estimated on the basis of the focusing state of the target, like an auto-focus detection mechanism in a camera.

The imaging device 1 can grasp the distance from the imaging device 1 to a target or the like by providing the distance measurement unit such as the LiDAR or the like. In addition, a 3-dimensional schematic structure of the target or the like can be grasped.

### (Effects of imaging device of first embodiment)

(1) The imaging device 1 of the first embodiment includes the image formation optical system 10, the light division member 13 configured to amplitude-divide the light passing through at least the part of the image formation optical system 10, the first imaging unit (the first imaging element 15a) configured to capture the first image 14a formed by one light flux divided by the light division member 13, and the second imaging unit (the second imaging element 15b) configured to capture a portion in the second image 14b formed by the other light flux divided by the light division member 13. Then, the driving part 16 configured to move the second imaging unit in the direction crossing the light path of the other light flux is provided.
   According to the configuration, the imaging device 1 forms two images of the first image 14a and the second image 14b using the one image formation optical system 10. The first imaging unit (15a) captures the wide area images Im1 and Im3 that can include the target from the first image 14a, and the second imaging unit (15b) captures the narrow area images Im2 and Im4 that can include the target from the second image 14b. Then, as the driving part 16 moves the second imaging unit (15b), the imaging range in the second image 14b captured by the second imaging element 15b can be moved at a high speed. Accordingly, the imaging field of vision on the object side (target side) captured by the second imaging element 15b can also be moved at a high speed.
(2) The first imaging unit may include the first imaging element 15a configured to capture the first image 14a, the second imaging unit may include the second imaging element 15b configured to capture an image of a portion of the second image 14b, the array pitch (PXb, PYb) of the pixels (the second pixels PEb) of the second imaging element 15b may be smaller than the array pitch (PZa, PYa) of the pixels (the first pixels PEa) of the first imaging element 15a, and the driving part 16 may move the second imaging element 15b in the direction crossing the light path of the other light flux. In this configuration, the resolution of the narrow area images Im2 and Im4 captured by the second imaging element 15b can be increased to be higher than the resolution of the wide area images Im1 and Im3 captured by the first imaging element 15a.
(3) A maximum angle of view of the image formation optical system 10, i.e., a maximum angle of view on the object side of the wide area images Im1 and Im3 captured by the first imaging element 15a may be 170° or more. In this case, the wide area images Im1 and Im3 can simultaneously capture a wider range on the object side.

### (Imaging device of second embodiment)

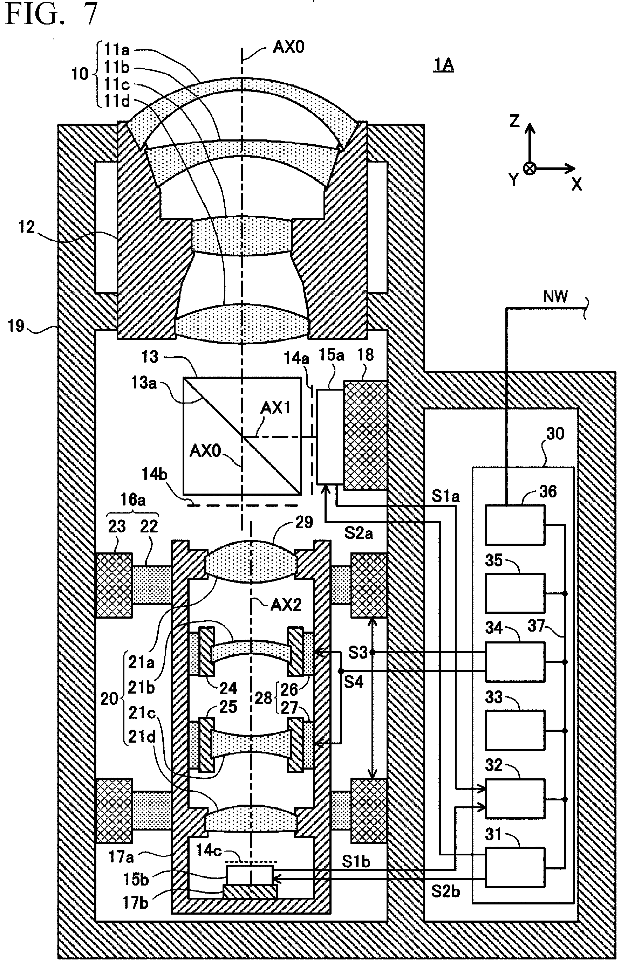

FIG. 7 is a view schematically showing the imaging device 1A of the second embodiment. The imaging device 1A of the second embodiment has many configurations in common with the imaging device 1 of the above-mentioned first embodiment. Accordingly, hereinafter, differences from the imaging device 1 of the first embodiment will be mainly explained, and common configurations will be designated by the same reference numerals and explanations will be omitted as appropriate.

The imaging device 1A of the second embodiment is distinguished from the imaging device 1 of the first embodiment in that an image re-formation optical system 20 configured to form a third image 14c by re-forming at least a part of the second image 14b formed by a light flux passing through the light division member 13 and advancing substantially along the optical axis AX0 is provided. Then, the second imaging element 15b is disposed in the vicinity of the third image 14c rather than the vicinity of the second image 14b. Further, in this case, a light flux reflected by the light division member 13 and advancing substantially along the optical axis AX1 is referred to as one light flux. In addition, a light flux passing through the light division member 13 and advancing substantially along the optical axis AX0 is referred to as the other light flux.

Further, both the image re-formation optical system 20 and the second imaging element 15b may be referred to as a second imaging unit. Further, the second image 14b is formed by the light flux (the other light flux) advancing substantially along the optical axis AX0, and the second imaging element 15b captures at least a portion of the third image 14c formed by re-forming a portion of the second image 14b using the image re-formation optical system 20. That is, the second imaging unit captures a portion in the second image formed by the other light flux divided by the light division member. Further, since at least a part of the second image 14b is re-formed as the third image 14c by the image re-formation optical system 20, the second image 14b is referred to as an intermediate image.

Further, when the second imaging unit (the image re-formation optical system 20 and the second imaging element 15b) captures a portion in the second image 14b, a part of the other light flux from the light division member 13 also enters the second imaging unit. In this case, the second imaging unit also has the light incidence part 29 into which a part of the other light flux enters. Further, the light incidence part 29 may be at least a part of the second imaging unit. For example, the light incidence part 29 may be a surface of a lens 21a in the image re-formation optical system 20 on a light incidence side (the side of the light division member 13).

Further, the second imaging unit may be referred to as a light receiving unit. The light receiving unit also receives a part of the other light flux from the light division member 13. In this case, the light receiving unit also has the light incidence part 29 into which a part of the other light flux enters. Further, the light incidence part 29 is also referred to as at least a part of the light receiving unit.

Further, the second imaging unit may include not only the image re-formation optical system 20 and the second imaging element 15b but also another element. For example, the second imaging unit may include, in addition to the image re-formation optical system 20 and the second imaging element 15b, at least one of a second driving unit 28, which will be described below, movable support parts 24 and 25, which will be described below, a first driving part 16a, which will be described below, a second holding frame 17a, which will be described below, and a second holding part 17b, which will be described below.

An optical axis of the image re-formation optical system 20 is an optical axis AX2 shown in FIG. 7. The image re-formation optical system 20 includes a plurality of lenses 21a to 21d disposed along the optical axis AX2 as an example. The plurality of lenses 21a to 21d are held by the second holding frame 17a. The second imaging element 15b is held by the second holding part 17b attached to the second holding frame 17a, and the imaging surface is disposed to substantially coincide with the third image 14c. In the imaging device 1A of the second embodiment, the center of the second effective region EA2 of the second imaging element 15b substantially coincides with the optical axis AX2 of the image re-formation optical system 20.

The second holding frame 17a is held by the housing 19 via the first driving part 16a.

The first driving part 16a includes, for example, a stator 23 fixed to the housing 19, and a mover 22 fixed to the second holding frame 17a and movable with respect to the stator 23 in the direction in the XY plane, and is moved with respect to the housing 19 in the direction in the XY plane while holding the second holding frame 17a. That is, the first driving part 16a moves the image re-formation optical system 20 and the second imaging element 15b (in other words, the second imaging unit) supported by the second holding frame 17a with respect to the image formation optical system 10 fixed to the housing 19 in the direction in the XY plane.

When the first driving part 16a moves the image re-formation optical system 20 and the second imaging element 15b, in the second image 14b, a region captured in the second imaging element 15b re-formed as the third image 14c, i.e., the above-mentioned second imaging range CA2 (see FIG. 3(b)) is changed. Further, in the second embodiment, a dimension of the second imaging range CA2 in the second image 14b is not limited to the same dimension as the second effective region EA2 of the second imaging element 15b, and can be enlarged or reduced according to the image formation magnification of the image re-formation optical system 20.

The first driving part 16a may be, for example, a linear motor having the stator 23 and the mover 22, or may be configured to have a stepping motor and a lead screw. Further, the first driving part 16a may be configured to have a stepping motor and a guide bar. That is, the second holding frame 17a is moved in the direction in the XY plane by the first driving part 16a in a state in which the image re-formation optical system 20 and the second imaging element 15b (in other words, the second imaging unit) are supported such that the optical positional relation between the image re-formation optical system 20 and the second imaging element 15b (for example, the relative positional relation between the image re-formation optical system 20 and the second imaging element 15b) is not changed. Further, the driving part 16a can also move the second holding frame 17a (the image re-formation optical system 20 and the second imaging element 15b) in the X direction or the Y direction. Further, the driving part 16a can also move the second holding frame 17a in an arbitrary one direction in the XY plane.

Further, the moving direction of the second holding frame 17a by the first driving part 16a is not necessarily limited to the direction in the XY plane but may be a direction crossing the Z direction, i.e., a direction crossing the optical axis AX0 of the image formation optical system 10. In other words, the first driving part 16a may move the image re-formation optical system 20 and the second imaging element 15b in a direction crossing the optical axis AX0 of the image formation optical system 10.

In addition, the moving direction of the second holding frame 17a may be a rotating direction, for example, at least one of a rotating direction (θx direction) using the X axis as a center, a rotating direction (θy direction) using the Y axis as a center, and a rotating direction (θz direction) using the Z axis as a center.

In other words, the first driving part 16a also moves the second holding frame 17a, i.e., the image re-formation optical system 20 and the second imaging element 15b (second imaging unit) in a direction crossing the direction in which the other light flux advancing substantially along the optical axis AX0 enters the second imaging element 15b. In addition, the first driving part 16a also moves the second holding frame 17a in an in-plane direction of an image surface of the second image 14b.

The first driving part 16a can also be referred to as a configuration corresponding to the driving part 16 in the imaging device 1 of the above-mentioned first embodiment.

In addition, the second holding frame 17a and the second holding part 17b can also be referred to as a configuration corresponding to the holding part 17 in the imaging device 1 of the above-mentioned first embodiment.

Further, when the second holding frame 17a directly holds the second imaging element 15b, the second holding part 17b may not be provided.

The second holding frame 17a may integrally hold the image re-formation optical system 20 and the second imaging element 15b. In addition, the second holding frame 17a may be an integrally formed configuration, or may be a configuration in which a plurality of components are combined.

In the lenses 21a to 21d that constitute the image re-formation optical system 20, the lenses 21a and 21d are fixed to the second holding frame 17a. On the other hand, the lens 21b is supported by the movable support part 24 movably supported with respect to the second holding frame 17a by a driving mechanism 26 such as a linear motor or the like in the direction of the optical axis AX2 (for example, ±Z direction). In addition, the lens 21c is supported by the movable support part 25 movably supported with respect to the second holding frame 17a by a driving mechanism 27 such as a linear motor or the like in the direction of the optical axis AX2 (for example, ±Z direction).

That is, the lenses 21b and 21c are movable with respect to the lenses 21a and 21d by the driving mechanisms 26 and 27 in the direction of the optical axis AX2. Further, the lenses 21b and 21c may be movable with respect to the lenses 21a and 21d by the driving mechanisms 26 and 27 substantially in the direction of the optical axis AX2, or may be movable with respect to the lenses 21a and 21d in a direction inclined from the direction of the optical axis AX2. Further, the driving mechanisms 26 and 27 are not limited to a mechanism including the above-mentioned linear motor and may be a moving mechanism having a stepping motor and a lead screw.

Further, the lens 21b may be configured to be movable in both the +Z direction and the - Z direction or may be configured to be movable only in either the +Z direction or the -Z direction by the driving mechanism 26. In addition, the lens 21c may be configured to be movable in both the +Z direction and the -Z direction or may be configured to be movable only in either the +Z direction or the -Z direction by the driving mechanism 27.

Hereinafter, the driving mechanisms 26 and 27 are collectively or individually referred to as the second driving unit 28. As the second driving unit 28 drives the lens 21b and the lens 21c, the lens 21b and the lens 21c are moved in the Z direction, and the image formation magnification (a magnification of the third image 14c with respect to the second image 14b, i.e., the third image 14c) of the image re-formation optical system 20 is changed.

Further, in FIG. 7, the lenses 21a to 21d are all shown as one lens, but they may each be a lens group constituted by a plurality of lenses, or may include mirrors, diffraction optical elements, or the like. In addition, the number of the lens groups that constitute the image re-formation optical system 20 is not limited to four as shown in the drawings but may be an arbitrary number of one or more. Further, in the lens groups that constitute the image re-formation optical system 20, the number of the lens group (or lenses) moved by the second driving unit 28 in the Z direction is not limited to the above-mentioned two groups (the lens 21b and the lens 21c) but may be another arbitrary number.

The image formation position of the third image 14c may be matched with the imaging surface of the second imaging element 15b by movement of some lenses 21b and 21c or the like by the second driving unit 28 in the optical axis AX2 direction. Alternatively, a driving mechanism configured to move the lenses 21a and 21d and the like, which are different from the lenses 21b and 21c, moved by the second driving unit 28 in the optical axis direction, in the optical axis AX2 direction may be provided, and the image formation position of the third image 14c may be matched with the imaging surface of the second imaging element 15b by the driving mechanism. Alternatively, a driving mechanism configured to move the second imaging element 15b in the optical axis AX2 direction may be provided, and the imaging surface of the second imaging element 15b may be matched with the image formation position of the third image 14c by the driving mechanism.

The position of the center CC of the second imaging range CA2 in the second image 14b is changed by driving of the first driving part 16a. In addition, a dimension of the second imaging range CA2 is changed by driving of the second driving unit 28. That is, an imaging field of vision on the object side (target side) captured by the second imaging element 15b is changed by driving of the first driving part 16a or the second driving unit 28.

The image formation magnification of the image re-formation optical system 20 may be an enlargement magnification that enlarges at least a part of the second image 14b to form the third image 14c, or may be an equal magnification or a reduction magnification. The image formation magnification of the image re-formation optical system 20 may be increased or decreased while remaining the enlargement magnification, may be increased or decreased with remaining the reduction magnification, or may be increased or decreased from the enlargement magnification to the reduction magnification by movement of some lenses 21b and 21c and the like by the second driving unit 28 in the optical axis AX2 direction.

When the image formation magnification of the image re-formation optical system 20 is the enlargement magnification, since the third image 14c is an image obtained by enlarging at least a part of the second image 14b, a resolution of the narrow area image captured by the second imaging element 15b is further improved.

Further, the image re-formation optical system 20 and the second imaging element 15b may not be integrally held by the second holding frame 17a. For example, the image re-formation optical system 20 may be held by the second holding frame 17a, and the second imaging element 15b may be held by a holding mechanism that is separate from the second holding frame 17a. Then, the first driving part 16a may move the second holding frame 17a and the separate holding mechanism in a direction crossing the optical axis AX0 (Z direction) of the image formation optical system 10 such that the optical positional relation between the image re-formation optical system 20 and the second imaging element 15b (the relative positional relation between the image re-formation optical system 20 and the second imaging element 15b) is not changed. In this case, the second holding frame 17a and the separate holding mechanism are moved in synchronization.

Further, the modification of the image formation magnification of the image re-formation optical system 20 (in other words, the magnification of the third image 14c) may be performed by a method other than the above-mentioned movement of the lenses 21b and 21c in the Z direction. For example, the image formation magnification of the image re-formation optical system 20 may be modified by providing a so-called liquid lens in the image re-formation optical system 20 and changing a voltage applied to the liquid lens. In this case, the second driving unit 28 is a voltage controller configured to control a voltage applied to the liquid lens.

Further, the modification of the image formation magnification of the image re-formation optical system 20 may be performed by inserting or removing a predetermined optical system into/from the image re-formation optical system 20. In this case, the second driving unit 28 is an insertion/removal part configured to insert or remove the predetermined optical system. Further, the optical system (in other words, at least a part of the image re-formation optical system 20) disposed on a light path of light from the image formation optical system 10 may be configured to exchangeable with a first magnification optical system and a second magnification optical system having different image formation magnifications.

In this case, the magnification of the third image 14c is changed when the optical system disposed on the light path of the light from the image formation optical system 10 is the first magnification optical system and when is the second magnification optical system. Further, in this case, the second driving unit 28 is an exchange part configured to exchange the optical system disposed on the light path of the light from the image formation optical system 10 between the first magnification optical system and the second magnification optical system. In addition, the image formation magnification of the optical system may be modified by inverting front and rear sides of at least a part of the optical system (the image re-formation optical system 20) disposed on the light path of the light from the image formation optical system 10.

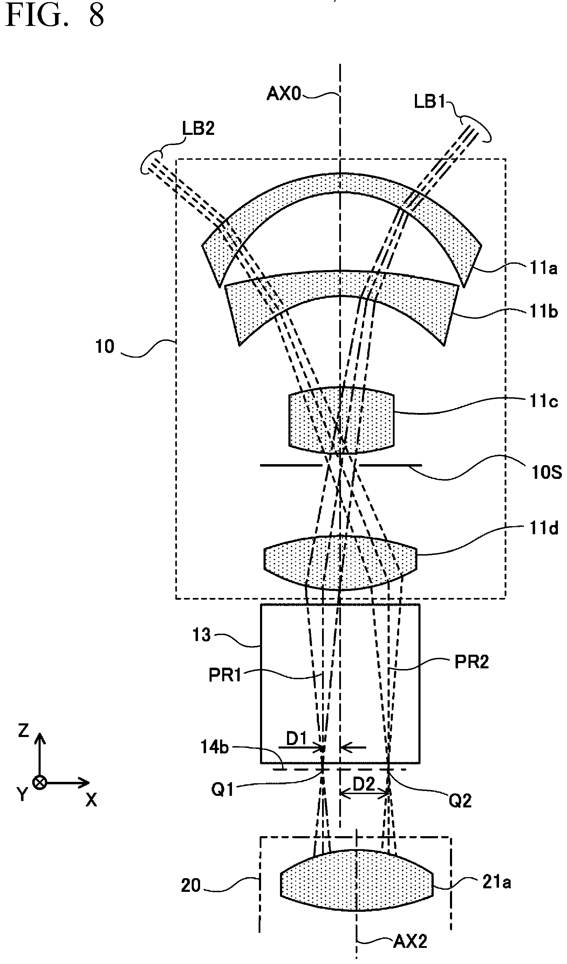

FIG. 8 is an enlarged view showing a part of the image formation optical system 10 and the image re-formation optical system 20 of the imaging device 1A of the second embodiment. Two light fluxes LB1 and LB2 shown in FIG. 8 are light fluxes from different portions on the object (not shown) (or from different objects), entering the image formation optical system 10 to form a part of the second image 14b, and entering the image re-formation optical system 20.

Hereinafter, a region in which the second image 14b is formed is also referred to as an image forming region. Further, the object (not shown) may be a target to be captured or recorded.

The light flux LB1 is directed from the image formation optical system 10 toward a first place Q1 in the image forming region in which the second image 14b is formed. The light flux LB2 is directed from the image formation optical system 10 toward a second place Q2 in the image forming region. A distance D1 from the optical axis AX0 of the image formation optical system 10 to the first place Q1 is different from a distance D2 from the optical axis AX0 of the image formation optical system 10 to the second place Q2.

A main beam PR1 of the light flux LB1 is a beam passing through a center of the light flux LB 1, and a main beam PR2 of the light flux LB2 is a beam passing through a center of the light flux LB2.

As described above, in the imaging device 1A of the second embodiment, at least a part of the second image 14b formed by the image formation optical system 10 is re-formed by the image re-formation optical system 20 to form the third image 14c on the second imaging element 15b. In general, in the above-mentioned configuration, when the optical axis AX2 of the image re-formation optical system 20 is position-shifted in the direction crossing the optical axis AX0 of the image formation optical system 10, since an incidence angle of the light flux entering the image re-formation optical system 20 is changed, image formation performance of the image re-formation optical system 20 may be degraded.

On the other hand, in the imaging device 1A of the second embodiment, the main beams PR1, PR2, and the like, of the light fluxes (the light fluxes LB1, LB2, and the like) image-formed by the image formation optical system 10 enter the image forming region substantially parallel to the optical axis AX0. In other words, the image formation optical system 10 becomes so-called telecentric on the side of the image forming region (the second image 14b).

An angle of the main beams (the main beams PR1, PR2, and the like) of the light fluxes (the light fluxes LB1, LB2, and the like) entering the image forming region with respect to the optical axis AX0 in a direction of advance may be, for example, within 1°. In this case, a difference between the angle of the main beam PR1 of the light flux LB1 from the image formation optical system 10 toward the first place Q1 in the image forming region with respect to the optical axis AX0 and the angle of the main beam PR2 of the light flux LB2 from the image formation optical system 10 toward the second place Q2 in the image forming region with respect to the optical axis AX0 is within 1°.

Further, an angle of the main beams (the main beams PR1, PR2, and the like) of the light fluxes (the light fluxes LB1, LB2, and the like) entering the image forming region with respect to the optical axis AX0 in the direction of advance may be within 0.5° or may be within 0.3°. In this case, a difference between the angle of the main beam PR1 of the light flux LB1 from the image formation optical system 10 toward the first place Q1 in the image forming region with respect to the optical axis AX0 and the angle of the main beam PR2 of the light flux LB2 from the image formation optical system 10 toward the second place Q2 in the image forming region with respect to the optical axis AX0 may be within 0.5° or may be within 0.3°.

In addition, an angle of the main beam of all the light fluxes entering the image forming region in the direction of advance with respect to the optical axis AX0 may be within 0.5° or may be within 0.3°. In addition, an angle of the two main beams of the light flux entering the image forming region at different positions in the direction of advance with respect to the optical axis AX0 may be within 0.5° or may be within 0.3°. These conditions may be satisfied for at least one light flux entering the image forming region.

Accordingly, the main beams (the main beams PR1, PR2, and the like) of the light fluxes (the light fluxes LB1, LB2, and the like) entering the image re-formation optical system 20 via the image forming region (the second image 14b) advance substantially parallel to the optical axis AX2 of the image re-formation optical system 20, and enters the image re-formation optical system 20. For this reason, even when the image re-formation optical system 20 is moved in a direction (the direction in the XY plane) perpendicular to the optical axis AX0 of the image formation optical system 10 by the first driving part 16a, an incidence angle of the light fluxes (the light fluxes LB1, LB2, and the like) entering the image re-formation optical system 20 hardly changes. Accordingly, even when the image re-formation optical system 20 is moved with respect to the image formation optical system 10 in the direction in the XY plane, the image re-formation optical system 20 can maintain good image formation performance, and the third image 14c with a high resolution can be captured by the second imaging element 15b.

In order to make the image formation optical system 10 telecentric on the side of the second image 14b (image forming region side), for example, an aperture diaphragm 10S may be provided at a predetermined position. Alternatively, since an effective diameter of a predetermined lens such as the lens 11c or the like is limited to a predetermined dimension, it may become telecentric on the side of the second image 14b (image forming region side). Further, a position where the aperture diaphragm 10S is disposed is not limited to a position shown in FIG. 8. Further, the aperture diaphragm 10S may not be provided in the image formation optical system 10.

Further, even when the image re-formation optical system 20 becomes telecentric on the side of the second image 14b, i.e., on the side of the image formation optical system 10, it is possible to prevent change of an incidence angle of an incidence light flux (the light fluxes LB1, LB2, and the like) to the image re-formation optical system 20 using movement of the image re-formation optical system 20 in the direction in the XY plane. For this reason, for example, an aperture diaphragm (not shown) may be provided in the image re-formation optical system 20, the main beams PR1, PR2, and the like of the light fluxes (the light fluxes LB1, LB2, and the like) passing through the image re-formation optical system 20 may be set to advance substantially parallel to the optical axis AX2 of the image re-formation optical system 20 by the aperture diaphragm. Instead of the aperture diaphragm, the effective diameter of the lenses of the lenses 21a to 21d and the like that constitute the image re-formation optical system 20 is limited to a predetermined system, and the image re-formation optical system 20 may become telecentric as described above.

An angle of the main beams (the main beams PR1, PR2, and the like) of the light fluxes (the light fluxes LB1, LB2, and the like) entering the image re-formation optical system 20 from the image forming region (the second image 14b) in the direction of advance with respect to the optical axis AX2 may be, for example, within 1°. In this case, a difference between the angle of the main beam PR1 of the light flux LB1 from the first place Q1 in the image forming region toward the image re-formation optical system 20 with respect to the optical axis AX2 and the angle of the main beam PR2 of the light flux LB2 from the second place Q2 in the image forming region toward the image re-formation optical system 20 with respect to the optical axis AX2 is within 1°.

Further, the angle of the main beams (the main beams PR1, PR2, and the like) of the light fluxes (the light fluxes LB1, LB2, and the like) entering the image re-formation optical system 20 from the image forming region in the direction of advance with respect to the optical axis AX2 may be within 0.5° or may be within 0.3°. In this case, a difference between the angle of the main beam PR1 of the light flux LB1 from the first place Q1 of the image forming region toward the image re-formation optical system 20 with respect to the optical axis AX2 and the angle of the main beam PR2 of the light flux LB2 from the second place Q2 of the image forming region toward the image re-formation optical system 20 with respect to the optical axis AX2 may be within 0.5° or may be within 0.3°.

In addition, the angle of the main beams of all the light fluxes entering the image re-formation optical system 20 from the image forming region in the direction of advance with respect to the optical axis AX2 may be within 0.5° or may be within 0.3°. In addition, the angle of the two main beams from different positions of the light fluxes entering the image re-formation optical system 20 from the image forming region in the direction of advance with respect to the optical axis AX2 may be within 0.5° or may be within 0.3°. These conditions may satisfy at least one light flux entering the image re-formation optical system 20 from the image forming region.

Further, both the image formation optical system 10 and the image re-formation optical system 20 may become telecentric on the side of the second image 14b (image forming region side). In this case, a difference between the angle of the main beams (the main beams PR1, PR2, and the like) of the light fluxes (the light fluxes LB1, LB2, and the like) entering the image forming region (the second image 14b) from the image formation optical system 10 in the direction of advance with respect to the optical axis AX0 and the angle of the main beams (the main beams PR1, PR2, and the like) of the light fluxes (the light fluxes LB1, LB2, and the like) entering the image re-formation optical system 20 from the image forming region (the second image 14b) in the direction of advance with respect to the optical axis AX2 may be, for example, within 1°.

Further, the optical axis AX0 of the image formation optical system 10 in the image forming region may be substantially parallel to the optical axis AX2 of the image re-formation optical system 20. Further, it is not limited to the image forming region, the optical axis AX0 in the entire image formation optical system 10 may be substantially parallel to the optical axis AX2 in the entire image re-formation optical system 20.

Further, a difference between the angle of the main beams (the main beams PR1, PR2, and the like) of the light fluxes (the light fluxes LB1, LB2, and the like) entering the image forming region (the second image 14b) from the image formation optical system 10 in the direction of advance with respect to the optical axis AX0 and the angle of the main beams (the main beams PR1, PR2, and the like) of the light fluxes (the light fluxes LB1, LB2, and the like) entering the image re-formation optical system 20 from the image forming region in the direction of advance with respect to the optical axis AX2 may be within 0.5° or may be within 0.3°. These conditions may satisfy at least one of the light fluxes passing through the image forming region.

Further, both the image formation optical system 10 and the image re-formation optical system 20 do not need to be telecentric on the side of the second image 14b. When either the image formation optical system 10 or the image re-formation optical system 20 becomes telecentric on the side of the second image 14b, the other may be an optical system with a large numerical aperture (or a bright optical system) that allows the light flux (the light fluxes LB1, LB2, and the like) to pass through the one optical system and the second imaging range CA2 of the second image 14b without blocking the light flux.

The imaging device 1A of the second embodiment may also be used for the same purpose as that of the imaging device 1 of the above-mentioned first embodiment.

The configuration and the function of the controller 30 of the imaging device 1A of the second embodiment are substantially the same configuration and function as the controller 30 of the imaging device 1 of the above-mentioned first embodiment. However, the imaging range controller 34 may control not only the position of the second imaging unit (the second imaging element 15b, the image re-formation optical system 20, and the like) in the direction crossing the optical axis AX0 but also the image formation magnification of the image re-formation optical system 20.

Like the above-mentioned first embodiment, the analysis unit 33 of the controller 30 analyzes the information of the target that can be included in the wide area image data corresponding to the wide area images Im1 and Im3 captured by the first imaging element 15a, or the information of the target that can be included in the narrow area image data corresponding to the narrow area images Im2 and Im4 captured by the second imaging element 15b. Further, the analysis unit 33 may analyze the information of the target that can be included in the wide area image data corresponding to the wide area images Im1 and Im3 captured by the first imaging element 15a, and the information of the target that can be included in the narrow area image data corresponding to the narrow area images Im2 and Im4 captured by the second imaging element 15b.

In the imaging device 1A of the second embodiment, the analysis unit 33 may perform at least one processing of detection of the presence or absence of the area of interest IA in the above-mentioned image (in other words, at least one image of the wide area images Im1 and Im3, and the narrow area images Im2 and Im4), calculation of the position of the area of interest IA in the image, calculation of the moving direction and the moving quantity of the area of interest IA in the image according to the change in the positional relation between the imaging device 1A and the target (in other words, calculation of the position of the area of interest IA in the image after the change in the positional relation between the imaging device 1A and the target), and detection of the facial expression or the gesture or hand gesture, and/or at least one processing of calculation of the dimension (size) of the area of interest IA in the image and calculation of the change amount of dimension (size) of the area of interest IA in the image according to the change in the positional relation between the imaging device 1A and the target (in other words, calculation of the dimension of the area of interest IA in the image after the positional relation between the imaging device 1A and the target is changed).

In other words, calculation of the dimension (size) of the area of interest IA by the analysis unit 33 may be rephrased as detection of the dimension (size) of the area of interest IA by the analysis unit 33.

For example, the analysis unit 33 may perform the above-mentioned object detection processing on the wide area image data to detect the area of interest IA and calculate the dimension (size) of the area of interest IA in the wide area images Im1 and Im3. Then, the analysis unit 33 may transmit the dimension of the area of interest IA in the wide area images Im1 and Im3 to the imaging range controller 34. Further, since the dimension of the area of interest IA in the image (the wide area images Im1 and Im3 or the narrow area images Im2 and Im4) can be calculated by a known method, description of the calculation method will be omitted.

Further, in other words, detection of the area of interest IA by the analysis unit 33 may be rephrased as recognition of the area of interest IA by the analysis unit 33. In addition, in other words, calculation of the dimension in the wide area images Im1 and Im3 of the area of interest IA by the analysis unit 33 may be rephrased as recognition of the dimension of the area of interest IA by the analysis unit 33.

Further, the imaging range controller 34 may send a driving signal S4 to the second driving unit 28 according to the information signal from the analysis unit 33 (in other words, the information related to the dimension of the area of interest IA in the wide area images Im1 and Im3 as the detection results), and modify the magnification of the image re-formation optical system 20, i.e., the magnification of the third image 14c (a dimension of the area of interest IA in the narrow area images Im2 and Im4). That is, the imaging range controller 34 may move the lenses 21b and 21c in the Z direction and modify the magnification of the image re-formation optical system 20 by driving the driving mechanisms 26 and 27 of the second driving unit 28. Further, modification of the magnification of the image re-formation optical system 20 (i.e., modification of the magnification of the third image 14c) can be rephrased as modification of the dimension of the area of interest IA in the narrow area images Im2 and Im4.

Further, the analysis unit 33 may calculate the dimension (size) of the area of interest IA in the wide area images Im1 and Im3 and/or calculate the position of the area of interest IA in the wide area images Im1 and Im3 like the first embodiment. Then, the imaging range controller 34 may modify the magnification of the image re-formation optical system 20 and/or send the driving signal S3 to the first driving part 16a on the basis of the above-mentioned detection results by the analysis unit 33 (the information related to the position of the area of interest IA in the wide area images Im1 and Im3) like the above-mentioned first embodiment, and move the image re-formation optical system 20 and the second imaging element 15b (in other words, second imaging unit) in the direction crossing the optical axis AX0.

In other words, the imaging range controller 34 may execute at least one of movement of the image re-formation optical system 20 and the second imaging element 15b (second imaging unit) by the first driving part 16a, and modification of the magnification of the image re-formation optical system 20 by the second driving unit 28 on the basis of the wide area image data. Further, the imaging range controller 34 may send the driving signal S4 to the second driving unit 28 while sending the driving signal S3 to the first driving part 16a, and move the positions of the lenses 21b and 21c while moving the positions of the image re-formation optical system 20 and the second imaging element 15b when modification of the magnification of the image re-formation optical system 20 and movement of the image re-formation optical system 20 and the second imaging element 15b are executed.

In this case, at least a part of a duration in which the positions of the image re-formation optical system 20 and the second imaging element 15b are moved overlaps at least a part of a duration in which the positions of the lenses 21b and 21c are moved. Further, the entire duration in which the positions of the image re-formation optical system 20 and the second imaging element 15b are moved may not completely overlap the entire duration in which the positions of the lenses 21b and 21c are moved.

In addition, the imaging range controller 34 may modify the magnification of the image re-formation optical system 20 such that the area of interest IA is included in the second imaging range CA2 of the second imaging element 15b according to the information signal from the analysis unit 33 (in other words, the information related to the dimension of the area of interest IA in the wide area images Im1 and Im3 as the detection results).

Further, the imaging range controller 34 may modify the magnification of the image re-formation optical system 20 and/or move the image re-formation optical system 20 and the second imaging element 15b in the direction crossing the optical axis AX0 such that the area of interest IA is included in the second imaging range CA2 on the basis of the above-mentioned detection result by the analysis unit 33 (the information related to the position of the area of interest IA in the wide area images Im1 and Im3).

That is, the imaging range controller 34 may execute at least one of movement of the image re-formation optical system 20 and the second imaging element 15b (second imaging unit) by the first driving part 16a and modification of the magnification of the image re-formation optical system 20 by the second driving unit 28 such that the area of interest IA is included in the second imaging range CA2 on the basis of the wide area image data.

Further, for example, when the dimension of the second imaging range CA2 is relatively largely different from the dimension of the area of interest IA and the area of interest IA is separated from the second imaging range CA2, as described above, the imaging range controller 34 may execute modification of the magnification of the image re-formation optical system 20 and movement of the image re-formation optical system 20 and the second imaging element 15b in the direction crossing the optical axis AX0 such that the area of interest IA is included in the second imaging range CA2.

Further, when the positional relation between the imaging device 1A and the target is changed, the analysis unit 33 may detect the presence or absence of the change in the dimension of the area of interest IA in the wide area images Im1 and Im3 (in other words, the change in the dimension of the image of at least the portion of the target). For example, the analysis unit 33 may detect the change in the dimension of the area of interest IA between the plurality of wide area images Im1 and Im3 captured by the first imaging element 15a at different times and calculate the change amount of the dimension of the area of interest IA by executing the above-mentioned tracking processing.

Then, the analysis unit 33 may calculate the change amount in the dimension of the area of interest IA in the wide area images Im1 and Im3 (in other words, the dimension of the area of interest IA after the positional relation between the imaging device 1A and the target is changed) when the dimension of the area of interest IA is changed. The analysis unit 33 transmits the change amount in the dimension of the area of interest IA in the wide area images Im1 and Im3 to the imaging range controller 34. Further, calculation of the change amount in the dimension of the area of interest IA by the analysis unit 33 can be rephrased as detection of the change amount in the dimension of the area of interest IA by the analysis unit 33.

Further, the change amount in the dimension of the area of interest IA in the wide area images Im1 and Im3 calculated by the analysis unit 33 can be rephrased as the dimension of the area of interest IA in the wide area images Im1 and Im3 after the positional relation between the imaging device 1A and the target is changed.

The imaging range controller 34 may send the driving signal S4 to the driving unit 28 according to the information signal from the analysis unit 33 (in other words, information related to the change amount in the dimension of the area of interest IA in the wide area images Im1 and Im3 as the detection results), and modify the magnification of the image re-formation optical system 20 such that the area of interest IA is not removed from the second imaging range CA2.

Further, the imaging range controller 34 may modify the magnification of the image re-formation optical system 20 to offset the change in the dimension of the area of interest IA according to the information signal from the analysis unit 33 (in other words, information related to the change amount in the dimension of the area of interest IA in the wide area images Im1 and Im3 as the detection results). For example, when the area of interest IA is increased, the imaging range controller 34 may lower the magnification of the image re-formation optical system 20. Meanwhile, when the area of interest IA is decreased, the imaging range controller 34 may increase the image formation magnification of the image re-formation optical system 20. In this case, the imaging device 1A can continue to capture the area of interest IA at a substantially constant dimension with respect to the second imaging range CA2 even when a distance between the target and the imaging device 1A is changed.

Further, the analysis unit 33 may calculate the change amount in the dimension of the area of interest IA in the wide area images Im1 and Im3 and/or calculate the moving direction and the moving quantity of the area of interest IA in the wide area images Im1 and Im3 like the first embodiment. Then, the imaging range controller 34 may modify the magnification of the image re-formation optical system 20 and/or move the image re-formation optical system 20 and the second imaging element 15b in the direction crossing the optical axis AX0 such that the area of interest IA is not removed from the second imaging range CA2.

In other words, the imaging range controller 34 may execute at least one of movement of the image re-formation optical system 20 and the second imaging element 15b (second imaging unit) by the first driving part 16a and modification of the magnification of the image re-formation optical system 20 by the second driving unit 28 such that the area of interest IA is not removed from the second imaging range CA2 on the basis of the wide area image data.

Further, the analysis unit 33 may predict (calculate) the change amount in the dimension of the area of interest IA per the next predetermined time through conventional deep learning on the basis of the change amount in the dimension of the area of interest IA in the wide area images Im1 and Im3 calculated by the above-mentioned tracking processing on the basis of the wide area image data captured on different times. Further, the change amount in the dimension of the area of interest IA predicted by the analysis unit 33 can be rephrased as detection of the change amount in the dimension of the area of interest IA by the analysis unit 33 in the future. Further, the change amount in the dimension of the area of interest IA in the wide area images Im1 and Im3 predicted by the analysis unit 33 can be rephrased as the dimension of the area of interest IA in the wide area images Im1 and Im3 in the future.

The imaging range controller 34 may modify the magnification of the image re-formation optical system 20 such that the area of interest IA is not removed from the second imaging range CA2 according to the information signal from the analysis unit 33 (in other words, prediction information related to the change amount in the dimension of the area of interest IA in the wide area images Im1 and Im3 as the detection results).

Further, the analysis unit 33 may predict the change amount in the dimension of the area of interest IA in the wide area images Im1 and Im3 and/or predict the moving direction and the moving quantity of the area of interest IA in the wide area images Im1 and Im3 like the first embodiment. Then, the imaging range controller 34 may modify the magnification of the image re-formation optical system 20 and/or move the image re-formation optical system 20 and the second imaging element 15b in the direction crossing the optical axis AX0 such that the area of interest IA is not removed from the second imaging range CA2.

Further, the imaging range controller 34 may modify the magnification of the image re-formation optical system 20 such that the dimension of the area of interest IA in the second imaging range CA2 is substantially not changed before and after the change in the positional relation between the target and the imaging device 1A according to the information signal from the analysis unit 33 (in other words, prediction information related to the change amount in the dimension of the area of interest IA in the wide area images Im1 and Im3 as the detection results). In other words, the imaging range controller 34 may execute modification of the magnification of the image re-formation optical system 20 such that the dimension of the area of interest IA in the second imaging range CA2 is substantially not changed before and after the change in the positional relation between the target and the imaging device 1A on the basis of the wide area image data.

Further, like the first embodiment, the analysis unit 33 may predict the moving direction and the moving quantity of the area of interest IA in the wide area images Im1 and Im3. The imaging range controller 34 may move the image re-formation optical system 20 and the second imaging element 15b in the direction crossing the optical axis AX0 such that the position of the area of interest IA in the second imaging range CA2 is substantially not changed before and after the change in the positional relation between the target and the imaging device 1A according to the information signal from the analysis unit 33 (in other words, prediction information related to the moving direction and the moving quantity of the area of interest IA in the wide area images Im1 and Im3 as the detection results).

In other words, the imaging range controller 34 may execute movement of the image re-formation optical system 20 and the second imaging element 15b such that the position of the area of interest IA in the second imaging range CA2 is substantially not changed before and after the change in the positional relation between the target and the imaging device 1A on the basis of the wide area image data.

Further, the analysis unit 33 may calculate the dimension of the area of interest IA in the narrow area images Im2 and Im4 by analyzing not only the wide area image data but also the narrow area image data (in other words, the image data of the narrow area images Im2 and Im4) using the above-mentioned object detection processing. The imaging range controller 34 may modify the magnification of the image re-formation optical system 20 according to the information signal from the analysis unit 33 (in other words, information related to the position of the area of interest IA in the narrow area images Im2 and Im4 as the detection results).

Further, the analysis unit 33 may calculate the dimension of the area of interest IA in the narrow area images Im2 and Im4 and/or calculate the position of the area of interest IA in the narrow area images Im2 and Im4 like the first embodiment. Then, the imaging range controller 34 may modify the magnification of the image re-formation optical system 20 and/or move the image re-formation optical system 20 and the second imaging element 15b in the direction crossing the optical axis AX0.

In other words, the imaging range controller 34 may execute at least one of movement of the image re-formation optical system 20 and the second imaging element 15b by the first driving part 16a and modification of the magnification of the image re-formation optical system 20 by the second driving unit 28 on the basis of the narrow area image data.

Further, when the positional relation between the imaging device 1A and the target is changed, the analysis unit 33 may calculate the change amount in the dimension of the area of interest IA in the narrow area images Im2 and Im4 using the above-mentioned tracking processing. Further, the change amount in the dimension of the area of interest IA in the wide area images Im2 and Im4 calculated by the analysis unit 33 can be rephrased as the dimension of the area of interest IA in the wide area images Im2 and Im4 after the positional relation between the imaging device 1A and the target is changed.

The imaging range controller 34 may modify the magnification of the image re-formation optical system 20 such that the area of interest IA is not removed from the second imaging range CA2 according to the information signal from the analysis unit 33 (in other words, information related to the change amount in the dimension of the area of interest IA in the narrow area images Im2 and Im4 as the detection results).

Further, the imaging range controller 34 may modify the magnification of the image re-formation optical system 20 such that the change in the dimension of the area of interest IA is offset according to the information signal from the analysis unit 33 (in other words, information related to the change amount in the dimension of the area of interest IA in the narrow area images Im2 and Im4 as the detection results). For example, when the area of interest IA is increased, the imaging range controller 34 may lower the magnification of the image re-formation optical system 20. Meanwhile, when the area of interest IA is reduced, the imaging range controller 34 may increase the image formation magnification of the image re-formation optical system 20.

Further, the analysis unit 33 may calculate the change amount in the dimension of the area of interest IA in the narrow area images Im2 and Im4 and/or calculate the moving direction and the moving quantity of the area of interest IA in the narrow area images Im2 and Im4 like the first embodiment. Then, the imaging range controller 34 may modify the magnification of the image re-formation optical system 20 and/or move the image re-formation optical system 20 and the second imaging element 15b in the direction crossing the optical axis AX0 such that the area of interest IA is not removed from the second imaging range CA2.

In other words, the imaging range controller 34 may execute at least one of movement of the image re-formation optical system 20 and the second imaging element 15b by the first driving part 16a and modification of the magnification of the image re-formation optical system 20 by the second driving unit 28 such that the area of interest IA is not removed from the second imaging range CA2 on the basis of the narrow area image data.

Further, the analysis unit 33 may predict the change amount in the dimension of the area of interest IA per a predetermined time in the future using the conventional deep learning on the basis of the change amount in the dimension of the area of interest IA in the narrow area images Im2 and Im4 calculated by the above-mentioned tracking processing on the basis of the narrow area image data captured on different times. Further, the change amount in the dimension of the area of interest IA in the narrow area images Im2 and Im4 predicted by the analysis unit 33 can be rephrased as the dimension of the area of interest IA in the narrow area images Im2 and Im4 in the future.

The imaging range controller 34 may modify the magnification of the image re-formation optical system 20 such that the area of interest IA is not removed from the second imaging range CA2 according to the information signal from the analysis unit 33 (in other words, prediction information related to the change amount in the dimension of the area of interest IA in the narrow area images Im2 and Im4 as the detection results).

Further, the analysis unit 33 may predict the change amount in the dimension of the area of interest IA in the narrow area images Im2 and Im4 and/or predict the moving direction and the moving quantity of the area of interest IA in the narrow area images Im2 and Im4 like the first embodiment. Then, the imaging range controller 34 may modify the magnification of the image re-formation optical system 20 and/or move the image re-formation optical system 20 and the second imaging element 15b in the direction crossing the optical axis AX0 such that the area of interest IA is not removed from the second imaging range CA2.

Further, the imaging range controller 34 may modify the magnification of the image re-formation optical system 20 such that the dimension of the area of interest IA in the second imaging range CA2 is substantially not changed before and after the change in the positional relation between the target and the imaging device 1A according to the information signal from the analysis unit 33 (in other words, prediction information related to the change amount in the dimension of the area of interest IA in the narrow area images Im2 and Im4 as the detection results).

In other words, the imaging range controller 34 may execute modification of the magnification of the image re-formation optical system 20 such that the dimension of the area of interest IA in the second imaging range CA2 is substantially not changed before and after the change in the positional relation between the target and the imaging device 1A on the basis of the narrow area image data.

Further, like the first embodiment, the analysis unit 33 may predict the moving direction and the moving quantity of the area of interest IA in the narrow area images Im2 and Im4. The imaging range controller 34 may move the image re-formation optical system 20 and the second imaging element 15b in the direction crossing the optical axis AX0 such that the position of the area of interest IA in the second imaging range CA2 is substantially not changed before and after the change in the positional relation between the target and the imaging device 1A according to the information signal from the analysis unit 33 (in other words, prediction information related to the moving direction and the moving quantity of the area of interest IA in the wide area images Im2 and Im4 as the detection results).

In other words, the imaging range controller 34 may execute movement of the image re-formation optical system 20 and the second imaging element 15b such that the position of the area of interest IA in the second imaging range CA2 is substantially not changed before and after the change in the positional relation between the target and the imaging device 1A on the basis of the narrow area image data.

Further, like the above-mentioned first embodiment, the analysis unit 33 may determine that the area of interest IA is deviated from the second imaging range CA2 when the area of interest IA cannot be detected on the narrow area images Im2 and Im4 by the above-mentioned object detection processing according to the change in the positional relation between the target and the imaging device 1A, or the like.

In this case, the analysis unit 33 may calculate at least one of the dimension and the position of the area of interest IA in the wide area images Im1 and Im3 by analyzing the wide area image data at this time since the area of interest IA (in other words, the target image) is detected again. The imaging range controller 34 may execute at least one of modification of the magnification of the image re-formation optical system 20 and movement of the image re-formation optical system 20 and the second imaging element 15b in the direction crossing the optical axis AX0 such that the area of interest IA is included in the second imaging range CA2 according to the information signal from the analysis unit 33 (in other words, information related to at least one of the dimension and the position of the area of interest IA in the wide area images Im1 and Im3).

In other words, when the area of interest IA is deviated from the second imaging range CA2, the imaging range controller 34 may execute at least one of movement of the image re-formation optical system 20 and the second imaging element 15b and modification of the magnification of the image re-formation optical system 20 such that the area of interest IA is included in the second imaging range CA2 on the basis of the wide area image data.

Further, when the analysis unit 33 cannot detect the area of interest IA on the narrow area images Im2 and Im4, the analysis unit 33 may not analyze the wide area image data at this time. In this case, the imaging range controller 34 may lower the magnification of the image re-formation optical system 20. Since a field of vision on the object side corresponding to the second imaging range CA2 is widened by lowering the magnification of the image re-formation optical system 20, a search range of the target can be widened (in other words, a dimension of the area of interest IA can be reduced).

Further, the analysis unit 33 may detect that the area of interest IA is included in the second imaging range CA2 by the above-mentioned object detection processing. In other words, when the area of interest IA is deviated from the second imaging range CA2, the imaging range controller 34 may lower the enlargement magnification of the image re-formation optical system 20 such that the area of interest IA is included in the second imaging range CA2.

Further, like the first embodiment, when the analysis unit 33 cannot detect the area of interest IA on the narrow area images Im2 and Im4, the analysis unit 33 may not analyze the wide area image data at this time. In this case, the imaging range controller 34 may search the area of interest IA by moving the image re-formation optical system 20 and the second imaging element 15b along a predetermined path in the direction crossing the optical axis AX0. Then, the second imaging element 15b may be stopped at a position where the area of interest IA is included in the second imaging range CA2.

In other words, when the area of interest IA is deviated from the second imaging range CA2, the imaging range controller 34 may execute at least one of movement of the image re-formation optical system 20 and the second imaging element 15b by the first driving part 16a and modification of the magnification of the image re-formation optical system 20 by the second driving unit 28 such that the area of interest IA is included in the second imaging range CA2.

Further, when the analysis unit 33 determines that the target is deviated from the second imaging range CA2, in order to detect the area of interest IA (in other words, the target image) again, the imaging range controller 34 may lower the image formation magnification of the image re-formation optical system 20 while moving the image re-formation optical system 20 and the second imaging element 15b.

Further, the analysis unit 33 may perform at least one of the operations A to F described in the first embodiment and the following operation G when the above-mentioned predetermined facial expression or operation of the person or the like is detected as the target included in the wide area images Im1 and Im3 or the narrow area images Im2 and Im4 on the basis of the wide area image data or the narrow area image data.

G: An instruction of lowering the image formation magnification of the image re-formation optical system 20 or an instruction of increasing the image formation magnification of the image re-formation optical system 20 is emitted to the imaging range controller 34.

In addition, when any one of the operations A to G is started, once the predetermined time has elapsed, the analysis unit 33 may terminate those operations.

Further, the imaging range controller 34 may send the driving signal S4 to the second driving unit 28 and move the lenses 21b and 21c on the basis of the signal input from an operation unit (not shown) via the interface part 36 regardless of the information of the target analyzed by the analysis unit 33. Further, the imaging range controller 34 may send the driving signal S3 to the first driving part 16a and move the image formation optical system 20 and the second imaging element 15b on the basis of the signal input from the operation unit (not shown) via the interface part 36.

Further, the imaging range controller 34 may send the driving signal S4 to the second driving unit 28 while sending the driving signal S3 to the first driving part 16a on the basis of the signal related to the modification of the center position of the second imaging range CA2 and the modification of the magnification of the image formation optical system 20 input from the operation unit (not shown) via the interface part 36.

Further, an operator may input at least one of the signals related to the modification of the center position of the field of vision and the signal related to the modification of the magnification of the image formation magnification 20 to the imaging range controller 34 via the interface part 36 by operating the operation unit (not shown).

Further, even in the imaging device 1A of the second embodiment, a positional relation between the first image 14a, the first imaging element 15a, the second image 14b, the image re-formation optical system 20 and the second imaging element 15b may be reversed.

That is, the first image 14a may be an image formed by the light flux passing through the dividing and reflecting surface 13a of the light division member 13 and advancing substantially along the optical axis AX0. The first imaging element 14a may be disposed at a position that substantially coincides with the first image 14a. Further, in this case, the light flux passing through the dividing and reflecting surface 13a and advancing substantially along the optical axis AX0 can be said to be one light flux.

Then, the second image 14b may be an image by the light flux reflected by the dividing and reflecting surface 13a of the light division member 13 and advancing substantially along the optical axis AX1, and the image of the second image 14b may be re-formed by the image re-formation optical system 20 having the optical axis AX2 substantially parallel to the optical axis AX1. Then, the second imaging element 15b may be disposed at a position that substantially coincides with the third image 14c re-formed by the image re-formation optical system 20. Further, in this case, the light flux reflected by the dividing and reflecting surface 13a of the light division member 13 and advancing substantially along the optical axis AX1 can be said to be the other light flux.

In this case, the second imaging unit including the image re-formation optical system 20 and the second imaging element 15b may be held by the second holding frame 17a, and may be held by the first driving part 16a together with the second holding frame 17a to be movable in the Y direction and the Z direction that are directions crossing the optical axis AX1. Further, the first driving part 16a may move the image re-formation optical system 20 and the second imaging element 15b in not only the Y direction and the Z direction but also the direction crossing the optical axis AX1.

Further, the first driving part 16a may move the image re-formation optical system 20 and the second imaging element 15b in the direction crossing the optical axis AX1 substantially parallel to the X direction of the image formation optical system 10 on the side of the second imaging element 15b (for example, a least one of the Y direction and the Z direction). Further, the first driving part 16a may move the image re-formation optical system 20 and the second imaging element 15b in the direction crossing the light path of the other light flux. In addition, the second driving unit 28 may move the lens 21b and the lens 21c along the optical axis AX1 substantially parallel to the X direction.

Further, the image re-formation optical system 20 is not limited to the above-mentioned optical system with variable image formation magnification, but may be an optical system with fixed image formation magnification. The image formation magnification may be enlargement magnification, equal magnification, or reduction magnification. However, as described above, when the image formation magnification of the image re-formation optical system 20 is the enlargement magnification, since the third image 14c is an image obtained by enlarging at least a part of the second image 14b, a resolution of the narrow area image captured by the second imaging element 15b is further improved.

When the image formation magnification of the image re-formation optical system 20 is the reduction magnification, the magnification of the first image 15a formed on the first imaging element 15a is greater than the magnification of the third image 14c formed on the second imaging element 15b. In this case, the wide area image may be captured by the image re-formation optical system 20 and the second imaging element 15b, the narrow area image may be captured by the first imaging element 15a, or the first imaging element 15a may be moved in the direction crossing the optical axis AX0.

Further, at least one of the image formation optical system 10 and the image re-formation optical system 20 does not have to be telecentric on the side of the second image 14b.

### (Effects of imaging device of second embodiment)

(4) Regarding the imaging device 1A of the second embodiment, in the imaging device 1 of the first embodiment, the second imaging unit includes the image re-formation optical system 20 configured to re-form a portion of the second image 14b with a predetermined enlargement magnification, and the imaging element (the second imaging element 15b) configured to capture an image of a portion of the second image (the third image 14c) re-formed by the image re-formation optical system 20. Then, the driving unit (the first driving part 16a) moves the image re-formation optical system 20 and the imaging element (the second imaging element 15b) in the direction crossing the light path of the other light flux (the light flux advancing along the optical axis AX0).

According to the configuration, in addition to the effects of the imaging device 1 of the first embodiment, the imaging device 1A can convert the narrow area image (Im2, Im4) captured by the second imaging element 15b into a higher resolution image using the image re-formation optical system 20.

(5) The image re-formation optical system 20 may enable modification of the enlargement magnification. In this case, the field of vision on the object side of the narrow area image (Im2, Im4) captured by the second imaging element 15b can be optimized.

(6) The image re-formation optical system 20 may be telecentric on the side of the second image 14b. In this case, even when the image re-formation optical system 20 is moved in the direction crossing the optical axis AX0 of the image formation optical system 10, the incidence angle of the light flux (the light fluxes LB1, LB2, and the like) entering the image re-formation optical system 20 hardly changes. Accordingly, the image re-formation optical system 20 can maintain good image formation performance, and the third image 14c with a high resolution can be formed on the second imaging element 15b.

(7) The array pitches PXb and PYb of the pixel PEb of the second imaging element 15b included in the second imaging unit may be smaller than the array pitches PZa and PYa of the pixel PEa of the first imaging element 15a included in the first imaging unit. In this case, the narrow area image (Im2, Im4) captured by the second imaging element 15b may be a higher resolution image.

(8) An area of the region (the first effective region EA1) in which the pixels PEa of the first imaging element 15a included in the first imaging unit are arranged may be greater than an area of the region (the second effective region EA2) in which the pixels PEb of the second imaging element 15b included in the second imaging unit. In this case, the field of vision on the object side of the wide area image (Im1, Im3) captured by the first imaging element 15a can be widened.

Further, the imaging device 1 of the first embodiment and the imaging device 1A of the second embodiment may be used for applications such as monitoring, guarding, and searching, and may be installed in a predetermined place such as nursery schools, schools, medical facilities, nursing care facilities, conference rooms, shops, stations, parks, vending machines, street lights, telephone poles, prisons, military facilities, national borders, roads, parks, and the like. When the imaging device 1 or 1A is installed in a nursery school, the imaging device 1 or 1A may set a part of the child's body as a target, for example. Further, when referring to at least one of one or more imaging devices 1 and one or more imaging devices 1A, it is referred to as the imaging device 1 or 1A.

Further, when the imaging device 1 or 1A is installed in a nursing care facility, the imaging device 1 or 1A may set, for example, the face or part of the body of the care recipient as a target.

Further, when the imaging device 1 or 1A is installed in a conference room, the target may be, for example, the faces of conference attendees. In this case, it can also be used as a video conferencing system with remote locations.

Further, when the imaging device 1 or 1A is installed near a station ticket gate, a store aisle or entrance, a vending machine, a streetlight, or a telephone pole, the imaging device 1 or 1A may use a person passing by as a target. Further, the imaging device 1 or 1A may detect the characteristics of a passing person on the basis of at least one of narrow area image data and wide area image data using the object detection processing described above and other existing image processing.

For example, the imaging device 1 or 1A may detect at least one of the gender, age, body type (height, weight, etc.), race, hairstyle, clothing, moving speed, moving direction, etc. of the person passing by on the basis of at least one of the narrow area image data and the wide area image data. In this case, the detected characteristics of people passing by can be used for market research, etc.

Further, the imaging device 1 or 1A may detect, for example, not only the characteristics of a passing person but also a moving body such as a passing vehicle. For example, the imaging device 1 or 1A may detect at least one of the types, colors, moving speeds, moving directions, etc. of passing vehicles.

Further, the imaging device 1 or 1A does not need to be fixedly installed indoors or outdoors, and may be installed in a moving body such as a vehicle, a ship, an aircraft (for example, a drone), etc.

Further, when the imaging device 1 or 1A is installed on an unmanned aircraft such as a drone, the object being searched (for example, a person, an animal, a vehicle, a ship, an aircraft, etc.) may be the target.

Further, when installing the imaging device 1 or 1A on an unmanned attack aircraft (e.g., an attack drone) as an unmanned aircraft, the object to be attacked (e.g., person, vehicle, ship, aircraft, building, etc.) may be set as a target.

For example, while it is conceivable that two cameras (a wide-angle camera and a telephoto camera with a gimbal) is mounted on an unmanned aircraft such as a drone, this is not desirable because objects mounted on an unmanned aircraft must be small and lightweight due to restrictions such as payload weight and payload size. Meanwhile, the imaging device 1 or 1A, or the imaging system 2 or 2A capable of wide angle imaging and telephoto imaging with one unit is appropriately mounted on an unmanned aircraft or the like because it is smaller and lighter than two cameras.

In addition, an imaging target of the imaging device 1 or 1A may be an industrial machine such as a machine tool or the like. For example, the imaging device 1 or 1A analyzes whether an industrial machine is normally operated on the basis of at least one of the captured narrow area image data and wide area image data. Then, if an abnormality is found in the shape or operation of the industrial machine, the imaging device 1 or 1A takes measures such as sending image data of the part related to the abnormality to the external instrument.

Further, the imaging device 1 or 1A may be installed in the working chamber of the machine tool (a space in which a workpiece is machined by a machining tool). In this case, for example, a region including at least a part of a machining tool attached to a main shaft, a workpiece placed on a stage, and a machining point of a workpiece by the machining tool may be used as a target.

Further, the imaging device 1 or 1A may detect at least one of a distance between the machining tool and the workpiece, a length (wear amount) of the machining tool, a shape of the machining tool, damage (breakage) of the machining tool, a protrusion amount of the machining tool, a shape of the workpiece, a position shift of the workpiece (with respect to a reference position of the stage), shapes of chips, an amount of the chips, and an amount of a cutting fluid applied to a machining portion on the basis of the image data of the target generated by the conventional image processing (at least one of the narrow area image data and the wide area image data).

Further, for example, the imaging device 1 or 1A may be installed in at least one place of a wall surface of the working chamber, a ceiling of the working chamber, a main shaft head, and a stage. For example, the imaging device 1 or 1A may be installed on the main shaft.

Further, the imaging device 1 or 1A may be detachably attached to the main shaft via the shank. In this case, the imaging device 1 or 1A attached to the main shaft may be exchanged with an arbitrary machining tool by a machining tool exchange device. In addition, the imaging device 1 or 1A may be stored in the machining tool exchange device, and the machining tool attached to the main shaft may be exchanged with the imaging device 1 or 1A.

In addition, the imaging device 1 or 1A may be installed at two places or more in a wall surface of the working chamber, a ceiling of the working chamber, a main shaft head, and a stage. For example, the imaging device may be installed at different places on the wall surface of the working chamber, or may be installed at one place or more on the wall surface of the working chamber and one place or more in the ceiling of the working chamber. When the plurality of imaging devices 1 or 1A are installed in this way, they may be installed such that the target in the working chamber can be captured from different directions (captured from different view points). Further, when the plurality of imaging devices 1 or 1A are installed, they may be installed such that maximum field of vision regions thereof partially overlap each other.

Further, the imaging device 1 or 1A may be installed on different portions from the working chamber of the machine tool. For example, the imaging device may be installed in a machining tool exchange device configured to exchange the machining tool attached to the main shaft of the working chamber with another type of machining tool.

Further, the machining tool exchange device may be, for example, an automatic machining tool exchange device (automatic tool changer: ATC).

In addition, the imaging device 1 or 1A may be installed in a light processing device configured to process a workpiece with processing light. In this case, the imaging device 1 or 1A may detect a processing place on the workpiece (a place irradiated with processing light) or the like as a target. Further, when the light processing device is a three-dimensional additive laminating molding apparatus, the imaging device 1 or 1A may detect a forming material as a target on the basis of at least one of the narrow area image data and the wide area image data, and detect a supply status of the forming material using the conventional image processing.

### (Light receiving device of third embodiment)

Each of the imaging device 1 and 1A of the above-mentioned embodiments and variants thereof can also be said to be a light receiving device including the imaging unit (the imaging element 15a) configured to capture an image formed by one light flux divided by the light division member 13, and the light receiving unit (the second imaging unit including the second imaging element 15b) having the light incidence part into which some of the other light flux divided by the light division member 13 enters.

### (Effects of light receiving device of third embodiment)

(9) The light receiving device 1 or 1A of the third embodiment includes the image formation optical system 10, the light division member 13 configured to amplitude-divide light passing through at least a part of the image formation optical system 10, the imaging unit 15a configured to capture the image 14a formed by one light flux divided by the light division member 13, the light receiving unit (the second imaging unit including the second imaging element 15b) having the light incidence part 29 into which some of the other light flux divided by the light division member 13 enters, and the driving part 16 configured to move the light incidence part 29 in the direction crossing the light path of the other light flux.

According to the configuration, like the imaging device 1 or 1A of the above-mentioned embodiment and variant thereof, the light receiving device 1 or 1A can rapidly move a range in which light is received by the light receiving unit of the second image 14b as the driving part 16 moves the light incidence part 29. Accordingly, it is also possible to rapidly move the field of vision on the object side (target side) received by the light receiving unit.

As described above, while the various embodiment and variants have been described, the present invention is not limited to those contents. In addition, the embodiments and variants may be solely applied or may be combined. Other aspects that can be considered within the technical scope of the present invention are also included without departing from the scope of the present invention.

### (Supplementary Statements)

It will be understood by those skilled in the art that the plurality of embodiments described above or their variants are specific examples of the following aspects.

### (Aspect 1)

An imaging device comprising: an image formation optical system; a light division member configured to divide light passing through at least a part of the image formation optical system; a first imaging unit configured to capture a first image formed by one light flux divided by the light division member; a second imaging unit configured to capture a portion in a second image formed by the other light flux divided by the light division member; and a driving unit configured to move the second imaging unit in a direction crossing a light path of the other light flux.

### (Aspect 2)

The imaging device according to aspect 1, wherein the first imaging unit includes a first imaging element configured to capture the first image, the second imaging unit includes a second imaging element configured to capture an image of a portion of the second image, an array pitch of pixels of the second imaging element is smaller than an array pitch of pixels of the first imaging element, and the driving unit moves the second imaging element in a direction crossing a light path of the other light flux.

### (Aspect 3)

The imaging device according to aspect 2, wherein an area of a region in which the pixels of the first imaging element are arranged is greater than an area of a region in which the pixels of the second imaging element are arranged.

### (Aspect 4)

The imaging device according to aspect 1, wherein the second imaging unit includes an image re-formation optical system configured to re-form a portion of the second image with a predetermined enlargement magnification, and an imaging element configured to capture an image of a portion of the second image re-formed by the image re-formation optical system, and the driving unit moves the image re-formation optical system and the imaging element in a direction crossing a light path of the other light flux.

### (Aspect 5)

The imaging device according to aspect 4, wherein the image re-formation optical system is able to modify the enlargement magnification.

### (Aspect 6)

The imaging device according to aspect 4 or 5, wherein the image formation optical system is telecentric on the side of the second image.

### (Aspect 7)

The imaging device according to aspect 6, wherein the image re-formation optical system re-forms the portion in the second image formed in an image forming region by the image formation optical system, and a difference between an angle formed by a main beam of the other light flux from the light division member toward a first place of the image forming region and an optical axis of the image formation optical system on the side of the second imaging unit and an angle formed by a main beam of the other light flux from the light division member toward a second place, in which a distance from the optical axis is different from the first place in the image forming region, and the optical axis is within 1°.

### (Aspect 8)

The imaging device according to any one of aspects 4 to 7, wherein the image re-formation optical system is telecentric on the side of the image formation optical system.

### (Aspect 9)

The imaging device according to aspect 8, wherein the image re-formation optical system re-forms the portion in the second image formed in the image forming region by the image formation optical system, and a difference between an angle formed by a main beam of a light flux from a first place of the image forming region toward the image re-formation optical system and an optical axis of the image re-formation optical system and an angle formed by a main beam of a light flux toward the image re-formation optical system from a second place, in which a distance from the optical axis of the image re-formation optical system is different from the first place in the image forming region, and the optical axis of the image re-formation optical system is within 1°.

### (Aspect 10)

The imaging device according to any one of aspects 4 to 9, wherein a difference between an angle formed by a main beam of the other light flux from the light division member and an optical axis of the image formation optical system on the side of the second imaging unit and an angle formed by a main beam of the light flux entering the image re-formation optical system and the optical axis of the image re-formation optical system is within 1°.

### (Aspect 11)

The imaging device according to any one of aspects 4 to 10, wherein the image re-formation optical system includes a plurality of optical members and when the driving unit is set as a first driving unit, the image re-formation optical system further includes a second driving unit configured to move at least one of the plurality of optical members along the optical axis of the image re-formation optical system, and the image re-formation optical system modifies the enlargement magnification by moving at least one of the plurality of optical members using the second driving unit.

### (Aspect 12)

The imaging device according to any one of aspects 4 to 11, including a holding part configured to hold the image re-formation optical system and the imaging element, wherein the driving unit moves the holding part in a direction crossing a light path of the other light flux.

### (Aspect 13)

The imaging device according to any one of aspects 4 to 12, wherein the first imaging unit includes a first imaging element configured to capture the first image and, when the imaging element included in the second imaging unit is set as a second imaging element, an array pitch of the pixels of the second imaging element is smaller than an array pitch of the pixels of the first imaging element.

### (Aspect 14)

The imaging device according to any one of aspects 4 to 13, wherein the first imaging unit includes a first imaging element configured to capture the first image and, when the imaging element included in the second imaging unit is set as a second imaging element, an area of a region in which the pixels of the first imaging element are arranged is greater than an area of a region in which the pixels of the second imaging element are arranged.

### (Aspect 15)

The imaging device according to aspect 2 or 3, including a holding part configured to hold the second imaging element, wherein the driving unit moves the holding part in a direction crossing a light path of the other light flux.

### (Aspect 16)

The imaging device according to any one of aspects 1 to 15, wherein a maximum angle of view of the image formation optical system is 170° or more.

### (Aspect 17)

The imaging device according to any one of aspects 1 to 16, wherein the light division member amplitude-divides light which has passed through at least a part of the image formation optical system.

### (Aspect 18)

The imaging device according to aspect 17, wherein the light division member amplitude-divides light which has passed through the image formation optical system.

### (Aspect 19)

The imaging device according to any one of aspects 1 to 16, wherein the light division member divides light which has passed through the image formation optical system.

### (Aspect 20)

The imaging device according to any one of aspect 5 and aspects 6 to 14 depending on aspect 5, or any one of aspects 16 to 19 depending on aspect 5, further including an imaging range controller configured to execute at least one of movement of the image re-formation optical system and the imaging element and modification of the enlargement magnification by the driving unit on the basis of the image data of the first image generated by the first imaging unit.

### (Aspect 21)

The imaging device according to aspect 20, wherein light from at least a target enters the image formation optical system, and the imaging range controller executes at least one of movement of the image re-formation optical system and the imaging element and modification of the enlargement magnification by the driving unit such that at least a portion of the image of the target included in the second image is included in the imaging range of the second image by the second imaging unit on the basis of the image data of the first image.

### (Aspect 22)

The imaging device according to aspect 21, wherein, when a positional relation between the target and the imaging device is changed, the imaging range controller executes at least one of movement of the image re-formation optical system and the imaging element and modification of the enlargement magnification by the driving unit such that at least a portion of the image of the target is not deviated from an imaging range of the second image by the second imaging unit on the basis of the image data of the first image.

### (Aspect 23)

The imaging device according to aspect 22, wherein, when a positional relation between the target and the imaging device is changed, the imaging range controller executes movement of the image re-formation optical system and the imaging element by the driving unit such that a position of at least a portion of the image of the target in the imaging range of the second image by the second imaging unit is not changed before and after the change in the positional relation on the basis of the image data of the first image.

### (Aspect 24)

The imaging device according to aspect 22 or 23, wherein, when the positional relation between the target and the imaging device is changed, the imaging range controller executes modification of the enlargement magnification such that a dimension of at least a portion of the image of the target captured by the second imaging unit is not changed before and after the change in the positional relation on the basis of the image data of the first image.

### (Aspect 25)

The imaging device according to any one of aspects 21 to 24, further comprising an analysis unit configured to detect at least a portion of the image of the target included in the image of the first image on the basis of the image data of the first image, wherein the imaging range controller executes at least one of movement of the image re-formation optical system and the imaging element and modification of the enlargement magnification by the driving unit on the basis of the detection result of at least the portion by the analysis unit.

### (Aspect 26)

The imaging device according to aspect 25, wherein the analysis unit detects a position of at least a portion of an image of the target on the image of the first image on the basis of the image data of the first image, and the imaging range controller executes movement of the image re-formation optical system and the imaging element by the driving unit on the basis of the position of at least the portion as the detection result by the analysis unit.

### (Aspect 27)

The imaging device according to aspect 25 or 26, wherein the analysis unit detects a size of at least a portion of the image of the target on the image of the first image on the basis of the image data of the first image, and the imaging range controller executes modification of the enlargement magnification on the basis of the size of at least the portion as the detection result by the analysis unit.

### (Aspect 28)

The imaging device according to any one of aspects 20 to 27, wherein the imaging range controller executes movement of the image re-formation optical system and the imaging element and modification of the enlargement magnification by the driving unit on the basis of the image data of the first image.

### (Aspect 29)

The imaging device according to any one of aspects 20 to 28, wherein the imaging range controller executes at least one of movement of the image re-formation optical system and the imaging element and modification of the enlargement magnification by the driving unit on the basis of the image data of at least a portion of the second image generated by the second imaging unit.

### (Aspect 30)

The imaging device according to aspect 29, wherein, when light from at least the target enters the image formation optical system and the positional relation between the target and the imaging device is changed, the imaging range controller executes at least one of movement of the image re-formation optical system and the imaging element and modification of the enlargement magnification by the driving unit such that at least a portion of the image of the target included in the second image is not deviated from the imaging range of the second image by the second imaging unit on the basis of the image data of at least a portion of the second image.

### (Aspect 31)

The imaging device according to aspect 29 or 30, wherein, when the positional relation between the target and the imaging device is changed, the imaging range controller executes movement of the image re-formation optical system and the imaging element by the driving unit such that a position of at least a portion of the image of the target in the imaging range of the second image by the second imaging unit is not changed before and after the change in the positional relation on the basis of the image data of at least a portion of the second image.

### (Aspect 32)

The imaging device according to any one of aspects 29 to 31, wherein, when the positional relation between the target and the imaging device is changed, the imaging range controller executes modification of the enlargement magnification such that a dimension of at least a portion of the image of the target captured by the second imaging unit is not changed before and after the change in the positional relation on the basis of the image data of at least a portion of the second image.

### (Aspect 33)

The imaging device according to aspect 29, wherein, when the positional relation between the target and the imaging device is changed and at least a portion of the image of the target is deviated from the imaging range of the second image by the second imaging unit, the imaging range controller executes at least one of movement of the image re-formation optical system and the imaging element and modification of the enlargement magnification by the driving unit such that at least the portion is included in the imaging range.

### (Aspect 34)

The imaging device according to aspect 29 or 33, wherein, when the positional relation between the target and the imaging device is changed and at least a portion of the image of the target is deviated from the imaging range of the second image by the second imaging unit, the imaging range controller lowers the enlargement magnification such that at least the portion is included in the imaging range.

### (Aspect 35)

The imaging device according to aspect 29, wherein, when the positional relation between the target and the imaging device is changed and at least a portion of the image of the target is deviated from the imaging range of the second image by the second imaging unit, the imaging range controller executes at least one of movement of the image re-formation optical system and the imaging element and modification of the enlargement magnification by the driving unit such that at least the portion is included in the imaging range on the basis of the image data of the first image.

### (Aspect 36)

The imaging device according to any one of aspects 30 to 35, further including an analysis unit configured to detect at least a portion of the image of the target included in an image of at least a portion of the second image on the basis of the image data of at least the portion of the second image.

### (Aspect 37)

The imaging device according to aspect 36 depending on any one of aspects 30 to 32, wherein the imaging range controller executes at least one of movement of the image re-formation optical system and the imaging element and modification of the enlargement magnification by the driving unit such that at least a portion of the image of the target is not deviated from the imaging range of the second image by the second imaging unit on the basis of the detection result of at least the portion of the image of the target by the analysis unit.

### (Aspect 38)

The imaging device according to aspect 37, wherein the analysis unit detects a position of at least a portion of the image of the target on the image of at least the portion of the second image on the basis of the image data of at least the portion of the second image, and the imaging range controller executes movement of the image re-formation optical system and the imaging element by the driving unit such that at least a portion of the image of the target is not deviated from the imaging range of the second image by the second imaging unit on the basis of the position of at least the portion of the image of the target on the image of at least the portion of the second image as the detection result by the analysis unit.

### (Aspect 39)

The imaging device according to aspect 37 or 38, wherein the analysis unit detects a size of at least a portion of the image of the target on the image of at least the portion of the second image on the basis of the image data of at least the portion of the second image, and the imaging range controller executes modification of the enlargement magnification such that at least a portion of the image of the target is not deviated from the imaging range of the second image by the second imaging unit on the basis of the size of at least the portion of the image of the target on the image of at least the portion of the second image which is obtained as the detection result by the analysis unit.

### (Aspect 40)

The imaging device according to any one of aspects 1 to 19, further including an imaging range controller configured to execute movement of the second imaging unit by the driving unit on the basis of the image data of the first image generated by the first imaging unit.

### (Aspect 41)

The imaging device according to aspect 40, wherein light from at least a target enters the image formation optical system, and the imaging range controller executes movement of the second imaging unit by the driving unit such that at least a portion of the image of the target included in the second image is included in the imaging range of the second image by the second imaging unit on the basis of the image data of the first image.

### (Aspect 42)

The imaging device according to aspect 40, wherein, when light from at least a target enters the image formation optical system and the positional relation between the target and the imaging device is changed, the imaging range controller executes movement of the second imaging unit by the driving unit such that at least a portion of the image of the target is not deviated from the imaging range of the second image by the second imaging unit on the basis of the image data of the first image.

### (Aspect 43)

The imaging device according to aspect 41 or 42, wherein, when the positional relation between the target and the imaging device is changed, the imaging range controller executes movement of the second imaging unit by the driving unit such that a position of at least a portion of the image of the target in the imaging range is not changed before and after the change in the positional relation on the basis of the image data of the first image.

### (Aspect 44)

The imaging device according to any one of aspects 41 to 43, further including an analysis unit configured to detect at least a portion of the image of the target included in the image of the first image on the basis of the image data of the first image, wherein the imaging range controller executes movement of the second imaging unit by the driving unit on the basis of the detection result of at least the portion of the image of the target by the analysis unit.

### (Aspect 45)

The imaging device according to aspect 44, wherein the analysis unit detects a position of at least the portion of the image of the target on the image of the first image on the basis of the image data of the first image, and the imaging range controller executes movement of the second imaging unit by the driving unit on the basis of the position of at least the portion as the detection result by the analysis unit.

### (Aspect 46)

The imaging device according to any one of aspects 40 to 45, wherein the imaging range controller executes movement of the second imaging unit by the driving unit on the basis of the image data of at least the portion of the second image generated by the second imaging unit.

### (Aspect 47)

The imaging device according to aspect 46, wherein, when light from at least the target enters the image formation optical system and the positional relation between the target and the imaging device is changed, the imaging range controller executes movement of the second imaging unit by the driving unit such that at least a portion of the image of the target included in the second image is not deviated from the imaging range of the second image by the second imaging unit on the basis of the image data of at least the portion of the second image.

### (Aspect 48)

The imaging device according to aspect 46 or 47, wherein, when light from at least the target enters the image formation optical system and the positional relation between the target and the imaging device is changed, the imaging range controller executes movement of the second imaging unit by the driving unit such that a position of at least a portion of the image of the target in the imaging range of the second image by the second imaging unit is not changed before and after the change in the positional relation on the basis of the image data of at least the portion of the second image.

### (Aspect 49)

The imaging device according to aspect 46, wherein, when light from at least the target enters the image formation optical system, the positional relation between the target and the imaging device is changed and at least the portion of the image of the target is deviated from the imaging range of the second image by the second imaging unit, the imaging range controller executes movement of the second imaging unit by the driving unit such that at least the portion is included in the imaging range.

### (Aspect 50)

The imaging device according to aspect 46, wherein, when light from at least the target enters the image formation optical system, the positional relation between the target and the imaging device is changed and at least the portion of the image of the target is deviated from the imaging range of the second image by the second imaging unit, the imaging range controller executes movement of the second imaging unit by the driving unit such that at least the portion is included in the imaging range on the basis of the image data of the first image.

### (Aspect 51)

The imaging device according to any one of aspects 46 to 50, wherein light from at least the target enters the image formation optical system, and the imaging device further includes an analysis unit configured to detect at least a portion of the image of the target included in the image of at least the portion of the second image on the basis of the image data of at least the portion of the second image.

### (Aspect 52)

The imaging device according to aspect 51 depending on aspect 47 or 48, wherein the imaging range controller executes movement of the second imaging unit by the driving unit such that at least a portion of the image of the target is not deviated from the imaging range on the basis of the detection result of at least the portion of the image of the target by the analysis unit.

### (Aspect 53)

The imaging device according to aspect 52, wherein the analysis unit detects a position of at least a portion of the image of the target on the image of a least the portion of the second image on the basis of the image data of at least the portion of the second image, and the imaging range controller executes movement of the driving unit such that at least the portion of the image of the target is not deviated from the imaging range on the basis of the position of at least the portion as the detection result by the analysis unit.

### (Aspect 54)

The imaging device according to any one of aspects 1 to 53, further including an imaging/recording controller configured to control starting and ending of recording of at least one of image data of the first image and image data of at least a portion of the second image on the basis of at least one of the image data of the first image generated by the first imaging unit and the image data of the portion of the second image generated by the second imaging unit.

### (Aspect 55)

The imaging device according to aspect 54, wherein light from at least the target enters the image formation optical system, the imaging device further includes an analysis unit configured to detect at least one of at least the portion of the image of the target included in the image of the first image and at least the portion of the image of the target included in the image of at least the portion of the second image, and the imaging/recording controller controls starting and ending of recording of at least one of the image data of the first image and the image data of at least the portion of the second image on the basis of the detection result of the analysis unit.

### (Aspect 56)

An imaging device including: an image formation optical system having a light division member configured to amplitude-divide light entering; a first imaging unit configured to capture a first image formed by one light divided by the light division member; a second imaging unit configured to capture a portion in a second image formed by the other light divided by the light division member; and a driving unit configured to move the second imaging unit in a direction crossing a light path of the other light.

### (Aspect 57)

The imaging device according to aspect 56, wherein the first imaging unit includes a first imaging element configured to capture the first image, the second imaging unit includes a second imaging element configured to capture an image of a portion of the second image, an array pitch of pixels of the second imaging element is smaller than an array pitch of pixels of the first imaging element, and the driving unit moves the second imaging element in a direction crossing a light path of the other light flux.

### (Aspect 58)

The imaging device according to aspect 57, wherein an area of a region in which the pixels of the first imaging element are arranged is greater than an area of a region in which the pixels of the second imaging element are arranged.

### (Aspect 59)

The imaging device according to aspect 56, wherein the second imaging unit includes an image re-formation optical system configured to re-form a portion of the second image with a predetermined enlargement magnification, and an imaging element configured to capture an image of a portion of the second image re-formed by the image re-formation optical system, and the driving unit moves the image re-formation optical system and the imaging element in a direction crossing a light path of the other light flux.

### (Aspect 60)

The imaging device according to aspect 59, wherein the image re-formation optical system is able to modify the enlargement magnification.

### (Aspect 61)

The imaging device according to aspect 59 or 60, wherein the image formation optical system is telecentric on the side of the second image.

### (Aspect 62)

The imaging device according to aspect 61, wherein the image re-formation optical system re-forms an image of the portion in the second image formed in an image forming region by the image formation optical system, and a difference between an angle formed by a main beam of the other light flux from the light division member toward a first place of the image forming region and an optical axis of the image formation optical system on the side of the second imaging unit and an angle formed by a main beam of the other light flux from the light division member toward a second place, in which a distance from the optical axis in the image forming region is different from the first place, and the optical axis is within 1°.

### (Aspect 63)

The imaging device according to any one of aspects 59 to 62, wherein the image re-formation optical system is telecentric on the side of the image formation optical system.

### (Aspect 64)

The imaging device according to aspect 63, wherein the image re-formation optical system re-forms an image of the portion in the second image formed in the image forming region by the image formation optical system, and a difference between an angle formed by a main beam of a light flux from a first place of the image forming region toward the image re-formation optical system and an optical axis of the image re-formation optical system and an angle formed by a main beam of a light flux toward the image re-formation optical system from a second place, in which a distance from the optical axis of the image re-formation optical system in the image forming region is different from the first place , and the optical axis of the image re-formation optical system is within 1°.

### (Aspect 65)

The imaging device according to any one of aspects 59 to 64, wherein a difference between an angle formed by a main beam of the other light flux from the light division member and an optical axis of the image formation optical system on the side of the second imaging unit and an angle formed by a main beam of the light flux entering the image re-formation optical system and the optical axis of the image re-formation optical system is within 1°.

### (Aspect 66)

The imaging device according to any one of aspects 59 to 65, wherein the image re-formation optical system includes a plurality of optical member and when the driving unit is set as a first driving unit, the image re-formation optical system further includes a second driving unit configured to move at least one of the plurality of optical members along an optical axis of the image re-formation optical system, and the image re-formation optical system modifies the enlargement magnification through movement of at least one of the plurality of optical members by the second driving unit.

### (Aspect 67)

The imaging device according to any one of aspects 59 to 66, including a holding part configured to hold the image re-formation optical system and the imaging element, wherein the driving unit moves the holding part in a direction crossing a light path of the other light flux.

### (Aspect 68)

The imaging device according to any one of aspects 59 to 67, wherein the first imaging unit includes a first imaging element configured to capture the first image, and when the imaging element included in the second imaging unit is set as a second imaging element, an array pitch of the pixels of the second imaging element is smaller than an array pitch in the pixels of the first imaging element.

### (Aspect 69)

The imaging device according to any one of aspects 59 to 68, wherein the first imaging unit includes a first imaging element configured to capture the first image, and when the imaging element included in the second imaging unit is set as a second imaging element, an area of a region in which the pixels of the first imaging element are arranged is greater than an area of a region in which the pixels of the second imaging element are arranged.

### (Aspect 70)

The imaging device according to aspect 57 or 58, including a holding part configured to hold the second imaging element, wherein the driving unit moves the holding part in a direction crossing a light path of the other light flux.

### (Aspect 71)

The imaging device according to any one of aspects 56 to 70, wherein a maximum angle of view of the image formation optical system is 170° or more.

### (Aspect 72)

The imaging device according to any one of aspects 56 to 71, wherein the light division member amplitude-divides entered light.

### (Aspect 73)

The imaging device according to aspect 72, wherein the image formation optical system further has at least one lens member, and the light division member amplitude-divides light which has passed through at least the one lens member.

### (Aspect 74)

The imaging device according to any one of aspects 56 to 71, wherein the image formation optical system further has at least one lens member, and the light division member divides light which has passed through at least the one lens member.

### (Aspect 75)

The imaging device according to aspect 60, any one of aspects 61 to 69 depending on aspect 60, or any one of aspects 71 to 74 depending on aspect 5, further including an imaging range controller configured to execute at least one of movement of the image re-formation optical system and the imaging element and modification of the enlargement magnification by the driving unit on the basis of the image data of the first image generated by the first imaging unit.

### (Aspect 76)

The imaging device according to aspect 75, further including an analysis unit configured to detect at least a portion of the image of the target included in the image of the first image on the basis of the image data of the first image, wherein the imaging range controller executes at least one of movement of the image re-formation optical system and the imaging element and modification of the enlargement magnification by the driving unit on the basis of the detection result of at least the portion by the analysis unit.

### (Aspect 77)

The imaging device according to aspect 76, wherein the analysis unit detects a position of at least a portion of the image of the target on the image of the first image on the basis of the image data of the first image, and the imaging range controller executes movement of the image re-formation optical system and the imaging element by the driving unit on the basis of the position of at least the portion as the detection result by the analysis unit.

### (Aspect 78)

The imaging device according to aspect 76 or 77, wherein the analysis unit detects a size of at least a portion of the image of the target on the image of the first image on the basis of the image data of the first image, and the imaging range controller executes modification of the enlargement magnification on the basis of the size of at least the portion as the detection result by the analysis unit.

### (Aspect 79)

The imaging device according to any one of aspects 75 to 78, wherein the imaging range controller executes movement of the image re-formation optical system and the imaging element and modification of the enlargement magnification by the driving unit on the basis of the image data of the first image.

### (Aspect 80)

The imaging device according to any one of aspects 56 to 74, further comprising an imaging range controller configured to execute movement of the second imaging unit by the driving unit on the basis of the image data of the first image generated by the first imaging unit.

### (Aspect 81)

The imaging device according to aspect 80, further including an analysis unit configured to detect at least a portion of the image of the target included in the image of the first image on the basis of the image data of the first image, wherein the imaging range controller executes movement of the second imaging unit by the driving unit on the basis of the detection result of at least the portion of the image of the target by the analysis unit.

### (Aspect 82)

The imaging device according to aspect 81, wherein the analysis unit detects a position of at least a portion of the image of the target on the image of the first image on the basis of the image data of the first image, and the imaging range controller executes movement of the second imaging unit by the driving unit on the basis of the position of at least the portion as the detection result by the analysis unit.

### (Aspect 83)

The imaging device according to any one of aspects 56 to 82, further including an imaging/recording controller configured to control starting and ending of recording of at least one of image data of the first image and image data of at least a portion of the second image on the basis of the image data of the first image generated by the first imaging unit and the image data of at least the portion of the second image generated by the second imaging unit.

### (Aspect 84)

An imaging device capable of capturing an arbitrary range, the imaging device including: an image formation optical system; a light division member configured to divide light which has passed through at least a part of the image formation optical system; a first imaging unit configured to capture a first image of the arbitrary range formed by one light flux divided by the light division member; a second imaging unit configured to capture a portion in a second image of the arbitrary range formed by the other light flux divided by the light division member; and a driving unit configured to move the second imaging unit in a direction crossing a light path of the other light flux.

### (Aspect 85)

The imaging device according to aspect 84, wherein the first imaging unit includes a first imaging element configured to capture the first image, the second imaging unit includes a second imaging element configured to capture an image of a portion of the second image, an array pitch of the pixels of the second imaging element is smaller than an array pitch of the pixels of the first imaging element, and the driving unit moves the second imaging element in a direction crossing a light path of the other light flux.

### (Aspect 86)

The imaging device according to aspect 85, wherein an area of a region in which the pixels of the first imaging element are arranged is greater than an area of a region in which the pixels of the second imaging element are arranged.

### (Aspect 87)

The imaging device according to aspect 84, wherein the second imaging unit includes an image re-formation optical system configured to re-form an image of a portion of the second image with a predetermined enlargement magnification, and an imaging element configured to capture an image of a portion of the second image re-formed by the image re-formation optical system, and the driving unit moves the image re-formation optical system and the imaging element in a direction crossing a light path of the other light flux.

### (Aspect 88)

The imaging device according to aspect 87, wherein the image re-formation optical system is able to modify the enlargement magnification.

### (Aspect 89)

The imaging device according to aspect 87 or 88, wherein the image formation optical system is telecentric on the side of the second image.

### (Aspect 90)

The imaging device according to aspect 89, wherein the image re-formation optical system re-forms an image of the portion in the second image formed in an image forming region by the image formation optical system, and a difference between an angle formed by a main beam of the other light flux from the light division member toward a first place of the image forming region and an optical axis of the image formation optical system on the side of the second imaging unit and an angle formed by a main beam of the other light flux from the light division member toward a second place, in which a distance from the optical axis in the image forming region is different from the first place, and the optical axis is within 1°.

### (Aspect 91)

The imaging device according to any one of aspects 87 to 90, wherein the image re-formation optical system is telecentric on the side of the image formation optical system.

### (Aspect 92)

The imaging device according to aspect 91, wherein the image re-formation optical system re-forms an image of the portion in the second image formed in an image forming region by the image formation optical system, and a difference between an angle formed by a main beam of a light flux from a first place of the image forming region toward the image re-formation optical system and an optical axis of the image re-formation optical system and an angle formed by a main beam of a light flux toward the image re-formation optical system from a second place, in which a distance from the optical axis of the image re-formation optical system in the image forming region is different from the first place, and the optical axis of the image re-formation optical system is within 1°.

### (Aspect 93)

The imaging device according to any one of aspects 87 to 92, wherein a difference between an angle formed by a main beam of the other light flux from the light division member and the optical axis of the image formation optical system on the side of the second imaging unit and an angle formed by a main beam of the light flux entering the image re-formation optical system and the optical axis of the image re-formation optical system is within 1°.

### (Aspect 94)

The imaging device according to any one of aspects 87 to 93, wherein the image re-formation optical system includes a plurality of optical members, and when the driving unit is set as a first driving unit, the image re-formation optical system further includes a second driving unit configured to move at least one of the plurality of optical members along the optical axis of the image re-formation optical system, and the image re-formation optical system modifies the enlargement magnification through movement of at least one of the plurality of optical members by the second driving unit.

### (Aspect 95)

The imaging device according to any one of aspects 87 to 94, including a holding part configured to hold the image re-formation optical system and the imaging element, and the driving unit moves the holding part in a direction crossing a light path of the other light flux.

### (Aspect 96)

The imaging device according to any one of aspects 87 to 95, wherein the first imaging unit includes a first imaging element configured to capture the first image, and when the imaging element included in the second imaging unit is set as a second imaging element, an array pitch of the pixels of the second imaging element is smaller than an array pitch of the pixels of the first imaging element.

### (Aspect 97)

The imaging device according to any one of aspects 87 to 96, wherein the first imaging unit includes a first imaging element configured to capture the first image, and when the imaging element included in the second imaging unit is set as a second imaging element, an area of a region in which the pixels of the first imaging element are arranged is greater than an area of a region in which the pixels of the second imaging element are arranged.

### (Aspect 98)

The imaging device according to aspect 85 or 86, including a holding part configured to hold the second imaging element, wherein the driving unit moves the holding part in a direction crossing a light path of the other light flux.

### (Aspect 99)

The imaging device according to any one of aspects 84 to 98, wherein a maximum angle of view of the image formation optical system is 170° or more.

### (Aspect 100)

The imaging device according to any one of aspects 84 to 99, wherein the light division member amplitude-divides light which has passed through at least a part of the image formation optical system.

### (Aspect 101)

The imaging device according to aspect 100, wherein the light division member amplitude-divides light which has passed through the image formation optical system.

### (Aspect 102)

The imaging device according to any one of aspects 87 to 99, wherein the light division member divides light which has passed through the image formation optical system.

### (Aspect 103)

The imaging device according to aspect 88, any one of aspects 89 to 97 depending on aspect 88, or any one of aspects 99 to 102 depending on aspect 88, further including an imaging range controller configured to execute at least one of movement of the image re-formation optical system and the imaging element and modification of the enlargement magnification by the driving unit on the basis of the image data of the first image generated by the first imaging unit.

### (Aspect 104)

The imaging device according to aspect 103, further including an analysis unit configured to detect at least a portion of the image of the target included in the image of the first image on the basis of the image data of the first image, wherein the imaging range controller executes at least one of movement of the image re-formation optical system and the imaging element and modification of the enlargement magnification by the driving unit on the basis of the detection result of at least the portion by the analysis unit.

### (Aspect 105)

The imaging device according to aspect 104, wherein the analysis unit detects a position of at least a portion of the image of the target on the image of the first image on the basis of the image data of the first image, and the imaging range controller executes movement of the image re-formation optical system and the imaging element by the driving unit on the basis of the position of at least the portion as the detection result by the analysis unit.

### (Aspect 106)

The imaging device according to aspect 104 or 105, wherein the analysis unit detects a size of at least a portion of the image of the target on the image of the first image on the basis of the image data of the first image, and the imaging range controller executes modification of the enlargement magnification on the basis of the size of at least the portion as the detection result by the analysis unit.

### (Aspect 107)

The imaging device according to any one of aspects 103 to 106, wherein the imaging range controller executes movement of the image re-formation optical system and the imaging element and modification of the enlargement magnification by the driving unit on the basis of the image data of the first image.

### (Aspect 108)

The imaging device according to any one of aspects 85 to 102, further including an imaging range controller configured to execute movement of the second imaging unit by the driving unit on the basis of the image data of the first image generated by the first imaging unit.

### (Aspect 109)

The imaging device according to aspect 108, further including an analysis unit configured to detect at least a portion of the image of the target included in the image of the first image on the basis of the image data of the first image, wherein the imaging range controller executes movement of the second imaging unit by the driving unit on the basis of the detection result of at least the portion of the image of the target by the analysis unit.

### (Aspect 110)

The imaging device according to aspect 109, wherein the analysis unit detects a position at least a portion of the image of the target on the image of the first image on the basis of the image data of the first image, and the imaging range controller executes movement of the second imaging unit by the driving unit on the basis of the position of at least the portion as the detection result by the analysis unit.

### (Aspect 111)

The imaging device according to any one of aspects 84 to 110, further including an imaging/recording controller configured to control starting and ending of recording of at least one of the image data of the first image and the image data of at least the portion of the second image on the basis of at least one of the image data of the first image generated by the first imaging unit and the image data of at least the portion of the second image generated by the second imaging unit.

### (Aspect 112)

A light receiving device including: a condensing optical system; a light division member configured to divide light which has passed through at least a portion of the condensing optical system; an imaging unit disposed in a light path of one light flux divided by the light division member; and a light receiving unit configured to receive light arriving at a light receiving region that is a part of a region occupied by the other light flux in a surface crossing the light path of the other light flux divided by the light division member, wherein the light receiving region is displaced in the region.

### (Aspect 113)

The light receiving device according to aspect 112, wherein the condensing optical system includes an image formation optical system configured to form an image on an imaging surface of the imaging unit, and the image formation optical system forms an image in the region.

### (Aspect 114)

The light receiving device according to aspect 112 or 113, wherein the light receiving unit has an imaging element having a plurality of pixels arranged in the partial region.

### (Aspect 115)

A light receiving device including: an image formation optical system; a light division member configured to divide light which has passed through at least a part of the image formation optical system; an imaging unit configured to capture an image formed by one light flux divided by the light division member; a light receiving unit configured to receive light which has passed through a light receiving region that is a part of a region through which the other light flux divided by the light division member passes; and a driving unit configured to displace the light receiving region in the region.

### (Aspect 116)

The light receiving device according to aspect 115, wherein, when an image is formed in the region by the other light flux and the imaging unit is set as a first imaging unit, the light receiving unit includes a second imaging unit, an imaging region by the second imaging unit is the light receiving region, and the driving unit displaces the imaging region by moving the second imaging unit.

### (Aspect 117)

The light receiving device according to aspect 116, wherein, when the image formed by the one light flux is set as a first image, the image formed in the region by the other light flux is set as a second image, the imaging region by the second imaging unit includes a portion of the second image, and the second imaging unit includes an image re-formation optical system configured to re-form an image of a portion of the second image and an imaging element configured to capture an image of the portion of the second image re-formed by the image re-formation optical system.

### [Reference Signs List]

1, 1A: imaging device, 10: image formation optical system, 11a to 11d: lens, 13: light division member, 14a: first image, 14b: second image, 14c: third image, 15a: first imaging element, 15b: second imaging element, 16: driving part 16a: first driving part, 17: holding part, 17a: second holding frame, 17b: second holding part, 19: housing, 20: image re-formation optical system, 21a to 21d: lens, 28: second driving part, 30: controller, 31: imaging controller, 32: image generating unit, 33: analysis unit, 34: imaging range controller, 35: storage unit, 36: interface part, EA1: first effective region, EA2: second effective region, CA1: first imaging range, CA2: second imaging range, IA: area of interest

## Claims

1. An imaging device comprising:
an image formation optical system;
a light division member configured to amplitude-divide light which has passed through at least a part of the image formation optical system;
a first imaging unit configured to capture a first image formed by one light flux divided by the light division member;
a second imaging unit configured to capture a portion in a second image formed by the other light flux divided by the light division member; and
a driving unit configured to move the second imaging unit in a direction crossing a light path of the other light flux.

2. The imaging device according to claim 1, wherein the first imaging unit includes a first imaging element configured to capture the first image,
the second imaging unit includes a second imaging element configured to capture an image of a portion of the second image,
an array pitch of pixels of the second imaging element is smaller than an array pitch of pixels of the first imaging element, and
the driving unit moves the second imaging element in a direction crossing a light path of the other light flux.

3. The imaging device according to claim 2, wherein an area of a region in which the pixels of the first imaging element are arranged is greater than an area of a region in which the pixels of the second imaging element are arranged.

4. The imaging device according to claim 1, wherein the second imaging unit includes an image re-formation optical system configured to re-form an image of a portion of the second image with a predetermined enlargement magnification, and an imaging element configured to capture an image of a portion of the second image re-formed by the image re-formation optical system, and
the driving unit movers the image re-formation optical system and the imaging element in a direction crossing a light path of the other light flux.

5. The imaging device according to claim 4, wherein the image re-formation optical system is able to modify the enlargement magnification.

6. The imaging device according to claim 4 or 5, wherein the image formation optical system is telecentric on the side of the second image.

7. The imaging device according to claim 6, wherein the image re-formation optical system re-forms an image of the portion in the second image formed in an image forming region by the image formation optical system, and
a difference between an angle formed by a main beam of the other light flux from the light division member toward a first place in the image forming region and an optical axis of the image formation optical system on the side of the second imaging unit and an angle formed by a main beam of the other light flux from the light division member toward a second place, in which a distance from the optical axis in the image forming region is different from the first place, and the optical axis is within 1°.

8. The imaging device according to any one of claims 4 to 7, wherein the image re-formation optical system is telecentric on the side of the image formation optical system.

9. The imaging device according to claim 8, wherein the image re-formation optical system re-forms an image of the portion in the second image formed in an image forming region by the image formation optical system, and
a difference between an angle formed by a main beam of a light flux from a first place of the image forming region toward the image re-formation optical system and an optical axis of the image re-formation optical system and an angle formed by a main beam of a light flux toward the image re-formation optical system from a second place, in which a distance from the optical axis of the image re-formation optical system in the image forming region is different from the first place, and the optical axis of the image re-formation optical system is within 1°.

10. The imaging device according to any one of claims 4 to 9, wherein a difference between an angle formed by a main beam of the other light flux from the light division member and an optical axis of the image formation optical system on the side of the second imaging unit and an angle formed by a main beam of a light flux entering the image re-formation optical system and an optical axis of the image re-formation optical system is within 1°.

11. The imaging device according to any one of claims 4 to 10, wherein the image re-formation optical system includes a plurality of optical members,
when the driving unit is set as a first driving unit, the image re-formation optical system further includes a second driving unit configured to move at least one of the plurality of optical members along the optical axis of the image re-formation optical system, and
the image re-formation optical system modifies the enlargement magnification through movement of at least one of the plurality of optical members by the second driving unit.

12. The imaging device according to any one of claims 4 to 11, comprising a holding part configured to hold the image re-formation optical system and the imaging element,
wherein the driving unit moves the holding part in a direction crossing a light path of the other light flux.

13. The imaging device according to any one of claims 4 to 12, wherein the first imaging unit includes a first imaging element configured to capture the first image, and
when the imaging element included in the second imaging unit is set as a second imaging element,
an array pitch of the pixels of the second imaging element is smaller than an array pitch of the pixels of the first imaging element.

14. The imaging device according to any one of claims 4 to 13, wherein the first imaging unit includes a first imaging element configured to capture the first image, and
when the imaging element included in the second imaging unit is set as a second imaging element,
an area of a region in which the pixels of the first imaging element are arranged is greater than an area of a region in which the pixels of the second imaging element are arranged.

15. The imaging device according to claim 2, comprising a holding part configured to hold the second imaging element,
wherein the driving unit moves the holding part in a direction crossing a light path of the other light flux.

16. The imaging device according to any one of claims 1 to 15, wherein a maximum angle of view of the image formation optical system is 170° or more.

17. The imaging device according to claim 5, any one of claims 6 to 14 depending on claim 5, or claim 16 depending on claim 5, further comprising an imaging range controller configured to execute movement of the image re-formation optical system and the imaging element and modification of the enlargement magnification by the driving unit on the basis of the image data of the first image generated by the first imaging unit.

18. The imaging device according to any one of claims 1 to 16, further comprising an imaging range controller configured to execute movement of the second imaging unit by the driving unit on the basis of the image data of the first image generated by the first imaging unit.

19. A light receiving device comprising:
an image formation optical system;
a light division member configured to amplitude-divide light which has passed through at least a part of the image formation optical system;
an imaging unit configured to capture an image formed by one light flux divided by the light division member;
a light receiving unit having a light incidence part into which a part of the other light flux divided by the light division member enters; and
a driving unit configured to move the light incidence part in a direction crossing a light path of the other light flux.

20. The light receiving device according to claim 19, wherein an image is formed by the other light flux,
when the image formed by the one light flux is set as a first image, an image formed by the other light flux is set as a second image,
when the imaging unit is set as a first imaging unit, the light receiving unit includes a second imaging unit,
the second imaging unit captures an image of a portion of the second image formed by a part of the other light flux, and
the driving unit moves the second imaging unit in a direction crossing a light path of the other light flux.

21. The light receiving device according to claim 20, wherein the second imaging unit includes an image re-formation optical system configured to re-form an image of a portion of the second image, and an imaging element configured to capture an image of the portion of the second image re-formed by the image re-formation optical system.
